(19) Europäisches Patentamt / European Patent Office / Office européen des brevets

(11) **EP 1 903 483 A1**

(12) **DEMANDE DE BREVET EUROPEEN**

(43) Date de publication:
**26.03.2008 Bulletin 2008/13**

(51) Int Cl.:
***G06N 5/02*** *(2006.01)*

(21) Numéro de dépôt: **07110578.7**

(22) Date de dépôt: **19.06.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **21.06.2006 FR 0605541**

(71) Demandeur: **France Télécom**
**75015 Paris (FR)**

(72) Inventeurs:
 • **Paulus, François**
  **RENNES 35000 (FR)**
 • **Bidault, Alain**
  **RENNES 35700 (FR)**

(74) Mandataire: **Cabinet Plasseraud**
 **52 rue de la Victoire**
 **75440 Paris Cedex 09 (FR)**

(54) **Procédé et dispositif de codage d'une note de similarité sémantique et spatiale entre concepts d'une ontologie mémorisée sous forme de treillis numéroté hiérarchiquement**

(57) Un procédé de calcul et de codage d'une note de similarité sémantique et spatiale entre concepts d'une ontologie mémorisée sous forme de treillis numéroté hiérarchiquement, dans lequel la note ($NSS_{ij}$) est calculée et codée (1) pour chaque concept ($C_i$) vis-à-vis d'un concept central ($C_j$), pris deux à deux, par rapprochement relativement à leurs caractéristiques sémantiques communes respectivement par éloignement en fonction de leur distance.

Application à la consultation d'ontologies représentatives de connaissances dans le domaine technique ou non technique.

$$H_c \left\{ C_i, I_i \right\}_{i=1}^{i=i\,max}$$

$$NSS_{ij} = f(CS_{ij}, D_{ij})$$

1

FIG. 2a

EP 1 903 483 A1

**Description**

L'invention se rapporte à un procédé et à un dispositif de codage d'une note de similarité sémantique et spatiale entre concepts d'une ontologie mémorisée sous forme de treillis numéroté hiérarchiquement.

Une ontologie, dans le cadre de l'objet de l'invention, doit être comprise comme un ensemble de connaissances de faits et de règles porteurs d'informations relatives à un domaine de connaissances, de nature technique et/ou non technique.

Ces informations sont traduites par des prédicats, entités logiques porteuses d'information, mettant en relation au moins un fait du domaine de connaissance, les arguments de ces prédicats pouvant être instanciés par des valeurs particulières de ces faits. Un prédicat (ex : Vol, et Pays sont deux prédicats utiles dans le domaine de connaissance d'un voyagiste) peut être instancié par des instances (ex : « 714/Sydney » est une instance de Vol, « France » une instance de Pays).

Des informations implicites, obtenues par saturation des connaissances de l'ontologie (règles, disjonctions, inclusions, définitions) peuvent être calculées par un raisonneur, défini pour un langage ou une logique de description déterminée, telle que la logique de description ALN qui permet d'exprimer des classes d'objets, des concepts, à partir des constructeurs associés aux lettres $\underline{A}$ : Top (concept universel), Bottom (concept vide), for All (restriction universelle sur certaines propriétés associées à certains concepts) et Not ; $\underline{L}$ : And (Et logique entre plusieurs concepts) et $\underline{N}$ : At least et At most (restriction de cardinalité sur certains concepts).

Un concept est un prédicat unaire, qui n'accepte qu'un seul argument, avec lequel il est possible de construire des formules logiques de description.

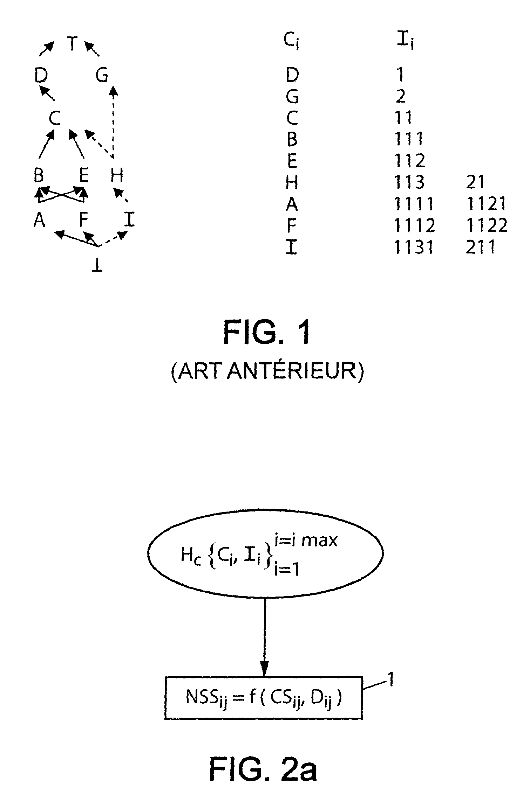

En référence à la figure 1, une ontologie de concepts peut être représentée sous forme d'un treillis. Un treillis est une relation d'ordre partiel pour lequel tout couple d'éléments $(e_1, e_2)$ du treillis possède un élément eS supérieur et un élément eI inférieur commun ($e_1$<eS et $e_2$<eS ; $e_1$>eI et $e_2$>eI). L'ordre est dit partiel, car il n'est pas défini pour toutes les paires d'éléments : en référence à l'élément supérieur eS=T, défini comme le concept universel, et l'élément inférieur eI= $\perp$, défini comme le concept vide, certains éléments au sens de la relation d'ordre précitée sont dits plus petits que d'autres, B<C, mais certains éléments ne sont pas comparables à d'autres, B ? H ou A ? F. Un élément ou concept peut avoir plusieurs éléments supérieurs et inférieurs.

La structure de treillis précitée est plus riche qu'une structure d'arbre classique, laquelle ne permet pas qu'un élément ou concept ait plusieurs pères.

Une ontologie qui ne contient plus d'information implicite est appelée ontologie saturée, dans laquelle toute information est accessible en, au plus, un pas de chaînage avant. Un pas de chaînage avant, ou pas de saturation, consiste à remplacer, par réécriture, la partie gauche d'une règle, appelée condition ou corps, par sa partie droite appelée conclusion ou tête de la règle.

L'exemple de treillis de concepts de la figure 1 a est décrit en logique de description, ainsi que représenté sur la figure précitée, selon la relation d'ordre de subsomption, ou généralisation, entre deux concepts qui comprend toutes les instances de la relation d'inclusion $\subseteq$ entre concepts primitifs. Cette relation entre deux éléments $e_1$ et $e_2$ se réduit pour deux concepts primitifs à vérifier l'existence d'une instance de la relation d'inclusion $e_1 \subseteq e_2$ ou $e_2 \subseteq e_1$. En revanche, déterminer si un concept défini en généralise un autre fait intervenir des calculs complexes sur les expressions de logique de description.

Ainsi, en référence à la figure 1,

A est fils de B et E - B est père de A et F - B, E, H, A, F et 1 sont les descendants de C - B, E, C et D sont les généralisants de A ; T désigne le concept universel ; 1 désigne le concept vide. Le treillis représenté en figure 1 incorpore deux concepts définis H :=C $\cap$ G et I avec H subsume I. Après ces deux adjonctions C, D et G subsument H et donc I.

Un processus de calcul et de codage d'une note de proximité sémantique entre deux concepts a été décrit dans le mémoire de thèse d'Alain Bidault, Université de Paris-Sud, France, thèse intitulée « Affinement de requêtes posées à un médiateur », numéro d'ordre 6932, juillet 2002.

Le calcul et le codage d'une telle note de proximité est en outre facilité par un processus de numérotation complète d'un treillis de concepts, lequel a fait l'objet de la demande de brevet français antérieure FR 05 07326 intitulée *« Procédé et système de codage sous forme d'un treillis d'une hiérarchie de concepts appartenant à une ontologie »,* déposée au nom de la demanderesse le 08 juillet 2005, mise à la disposition du public par accès en ligne sur le site INTERNET http://prioriart.ip.com/search.jsp?searchType=freetextSearch, antérieurement à la date de dépôt de la présente demande de brevet.

Un tel processus de numérotation a été défini pour des concepts apparaissant en logique de description dans un treillis de concepts. Les relations de ce treillis sont de la forme Concept 1 $\subseteq$ Concept 2 où le signe $\subseteq$ désigne la relation de subsomption entre deux concepts. Les concepts vide $\perp$ et universel T n'apparaissent pas explicitement dans la hiérarchie, mais sont supposés présents comme spécialisant et généralisant des concepts les plus spécialisés et des concepts les plus généraux.

Le processus de numérotation précité est remarquable en ce qu'il consiste à attribuer à chaque concept un identifiant constitué d'un ou plusieurs chemins, chaque chemin consistant en une suite d'entiers. Chaque chemin est unique sur le treillis de concepts et correspond à l'existence d'une succession d'arcs orientés entre le concept considéré et le concept universel T. T et ⊥ n'ont pas d'identifiant.

Une numérotation du treillis représenté en figure 1 conformément au processus précité s'écrit :

D(« 1 ») ; G(« 2 ») ; C(« 11 ») ; B(« 111 ») ; E(« 112 ») ; A(« 1111 », « 1121 ») ; F(«1112», «1122»); H(«21», «113»); I(« 211 », « 1131 »).

On observe sur la figure 1 que pour le concept A il existe deux trajets permettant d'atteindre le concept universel:

ABCD et AECD,

ce qui justifie la présence de deux chemins dans l'identifiant du concept A, un trajet étant défini comme le parcours d'un chemin.

Un concept déterminé possède des caractéristiques dont certaines sont définies. Les caractéristiques définies correspondent aux occurrences ou parcours des arcs constituant un trajet entre le concept déterminé considéré et le concept universel T. Chaque chemin de l'identifiant correspond à une composante principale du concept. Le nombre de caractéristiques d'un concept NC est lié à la profondeur Ph de la hiérarchie et au nombre K de chemins (composantes principales de son identifiant), NC= K × Ph. Les caractéristiques non définies sont les autres caractéristiques. Les caractéristiques sont prises en compte de façon globale sur l'ensemble de l'identifiant du concept ou pour chacun de ses chemins pris distinctement.

Dans l'exemple de la figure 1, hiérarchie de profondeur Ph=4, le concept I(« 211 », « 1131 ») possède K=2 composantes principales, NC=2x4=8 caractéristiques dont 3+4=7 sont définies et 8-7=1 est non définie.

Pour procéder au calcul des chemins, chaque noeud du treillis représentant un concept, le processus de numérotation consiste à attribuer à chaque noeud ou concept un identifiant, lequel hérite de tous les chemins de ses pères, auxquels on ajoute par exemple le caractère ou entier 1 pour le premier fils d'un noeud père p à chacun des chemins des noeuds père p, et ainsi de suite pour tout noeud fils successif du noeud père p.

Le processus de numérotation précité s'inspire du tri topologique sur un graphe orienté. Un graphe orienté est une relation binaire non symétrique où chaque élément de la relation est représenté par un noeud dans le graphe et où chaque occurrence de la relation R(« $n_1$ », « $n_2$ ») fait apparaître, sur le graphe, un arc orienté du noeud « $n_1$ » vers le noeud « $n_2$ ». L'algorithme du tri topologique permet d'appliquer un traitement à un noeud une fois que tous ses antécédents on été traités. Par analogie, un concept du treillis est numéroté une fois que tous ses concepts pères ont été numérotés. Pour garder les informations relatives à la hiérarchie, un concept fils $C_f$ hérite de tous les chemins de l'identifiant de chacun de ses concepts pères Cp étendus sur la droite, par exemple, par un nouveau caractère ou nombre entier. Le caractère ou nombre entier ajouté est le même pour tous les chemins d'un même père vers un de ses fils.

Pour garantir qu'un chemin n'est associé qu'à un seul concept de la hiérarchie, le caractère ou entier ajouté est différent pour chacun de ses fils.

En référence à la figure 1, le concept A a hérité du chemin « 111 » de son concept père B et du chemin « 112 » de son concept père E qu'il a étendus avec le caractère ou entier 1, qui aurait pu être différent en fonction du rang du concept fils A par exemple. L'ensemble des chemins étendus, obtenus à partir de tous les concepts pères du concept fils $C_f$ constitue l'identifiant de ce dernier.

Ainsi, il est possible de retrouver :

- tous les généralisants et les descendants d'un concept déterminé en parcourant l'identifiant de ce concept et la liste des concepts ;
- les nombres maximal et minimal d'arcs qui séparent chaque concept du concept universel T et par conséquent sa profondeur dans le treillis.

Le processus de numérotation permet en outre d'effectuer facilement un test de subsomption entre deux concepts, alors qu'un test de subsomption est un calcul complexe dans une ontologie décrite en logique de description qui permet de déterminer si les instances d'un concept sont incluses ou non dans celles d'un autre concept, en se basant sur la définition des concepts. Ce test facilité dans une ontologie saturée devient très simple grâce au processus de numérotation.

En effet, en référence à la figure 1, le concept C(« 11 ») subsume le concept A(« 1111 », « 1121 ») car le chemin de l'identifiant de C s'identifie à, au moins, un chemin de l'identifiant de A, ici en préfixant un des chemins de l'identifiant de A.

Le processus de numérotation permet également de déterminer leurs plus petits communs généralisants, ppcg. L'ensemble des généralisants communs ξgc de deux concepts $C_1$ et $C_2$ contient tous les concepts qui subsument à la

fois $C_1$ et $C_2$. Le ppcg est le plus grand sous-ensemble d'$\xi_{gc}$ ($\xi_{gc}$= ppcg U $\xi_{reste}$) tel qu'aucun concept du ppcg ne subsume un autre concept du ppcg et tel qu'aucun concept du ppcg ne subsume un concept de l'ensemble reste $\xi_{reste}$.

Le ppcg de deux concepts peut être directement accessible dans une ontologie saturée et il est facile d'étendre le calcul du ppcg de 2 à n concepts. La simplicité du calcul du ppcg à partir de la numérotation est encore plus appréciable.

En référence à la figure 1, le ppcg de A(« 1111 », « 1121 ») et F(« 1112 », « 1122 ») est l'ensemble des concepts associés aux chemins « 111 » et « 112 » à savoir les concepts B et E.

Le ppcg des concepts A, F et H se restreint au ppcg de (« 111 », « 112 ») avec (« 21 », « 113 ») à savoir le concept C(« 11 »). En revanche, les concepts D et G n'ont pas de ppcg, hormis le concept universel T.

Pour une description plus détaillées des notions précédentes, on pourra utilement se reporter à la demande de brevet français 05 07526 précitée.

Le processus de numérotation précité permet en outre de calculer et de coder une note de proximité sémantique entre deux concepts, ainsi que décrit dans le mémoire de thèse d'Alain Bidault précité.

La note codée précitée ne présente un intérêt que dans un classement pour ordonner des concepts par rapport à un concept central ou de référence. Plus le concept est en tête du classement obtenu, plus il est proche du concept de référence. Pour calculer et coder la note précitée, il est nécessaire de pouvoir déterminer, pour deux concepts donnés, le ppcg donné par les caractéristiques définies communes de ces derniers, et leur éloignement en nombre d'arcs vis-à-vis de ce ppcg.

En référence à la figure 1, les concepts A(« 1111 », « 1112 ») et F(« 1112 », « 1122 ») sont tous les deux à 2 fois 1 arc de leur ppcg (« 111 », «112»).

Le rapprochement sémantique de deux concepts favorise les descendants, lesquels possèdent toutes les caractéristiques définies de leurs ancêtres, ordonne ces descendants en fonction de leur profondeur, les fils sont plus proches que les autres descendants, et attribue une même note aux descendants situés sur la même strate ou niveau de descendance. En effet, un concept père ne fait pas de distinction entre ses concepts fils, de même qu'un concept grand-père n'en fait ni avec ses concepts fils, ni avec ses concepts petits-fils, et ainsi de suite.

La note de rapprochement sémantique d'un concept $C_1$ centré sur un concept $C_2$ se calcule en plusieurs phases qui sont détaillées ci après :

1) détermination des caractéristiques communes : on compte le nombre de caractéristiques définies de chaque chemin du ppcg sur chaque chemin du concept central $C_2$. Les chemins du concept $C_1$ sont rapprochés des chemins du ppcg, de façon à ce qu'ils aient un nombre maximal de caractéristiques communes. On note la taille de la partie commune : $T_{pc}$.

2) chaque nombre de caractéristiques est enrichi par les caractéristiques non définies d'un chemin du concept central $C_2$: en effet, par définition le concept central $C_2$ possède ses caractéristiques non définies en commun avec chacun de ses généralisants, donc avec le ppcg. Ce nombre est ensuite normalisé sur la profondeur de la hiérarchie pour obtenir une valeur de rapport de proximité PR :

$$(T_{pc} + P_{h} - |\text{chemin de } C_2|) / P_h = PR.$$

3) chaque caractéristique définie du concept $C_1$ absente du ppcg est prise en compte pour pénaliser le rapport de proximité PR, ce qui permet de prendre en compte l'éloignement de $C_1$ au ppcg. La valeur de la pénalité retenue est 0,002.

La note de proximité sur un chemin PN vérifie la relation :

$$PN = PR - 0{,}002 \,|\text{autres caractéristiques de } C_1|.$$

4) toute note de proximité sur un chemin PN négative est considérée comme nulle.

5) la note de proximité sémantique SPN est la moyenne des notes sur un chemin $PN_i$ : $SPN = \overline{PN_i}$.

En référence à la hiérarchie de concepts représentée en figure 1, de profondeur $P_h=4$, la note de proximité sémantique du concept $C_1$=A(« 1111 », « 1121 ») centrée sur le concept $C_2$=I(« 211 », « 1311 ») est calculée ci après :

- ppcg sur « 211 » = T et ppcg sur « 1131 » = C(« 11 ») ;
- longueur des caractéristiques communes 0 et 2 ;
- rapports de proximité : PR1=(0+4-3)/4=1/4 et PR2=(2+4-4) 4=1/2 ;

- notes sur un chemin: PN1= ¼ -(0,002 × 4)= 0,242 et PN2=1/2-0,002x2=0,496 ;
- note de proximité sémantique de C1 centré sur C2: SPN= (0,242+0,496) /2= 0,369.

La note de proximité sémantique de chaque concept de la hiérarchie de concepts représentée en figure 1, centrée sur le concept I est donnée au tableau T1 ci après.

**Tableau T1**

| | |
|---|---|
| I | Moyenne (((3+4-3)/4)-0 , ((4+4-4)/4)-0)= **1** |
| H | Moyenne (((2+4-3)/4)-0 , ((3+4-4)/4)-0)= **0,75** |
| C | Moyenne (((0+4-3)/4)-0,004 , ((2+4-4)/4)-0)= **0,373** |
| B | Moyenne (((0+4-3)/4)-0,006 , ((2+4-4)/4)-0,002)= **0,371** |
| E | Moyenne (((0+4-3)/4)-0,006 , ((2+4-4)/4)-0,002)= **0,371** |
| A | Moyenne (((0+4-3)/4)-0,008 , ((2+4-4)/4)-0,004)= **0,369** |
| F | Moyenne (((0+4-3)/4)-0,008 , ((2+4-4)/4)-0,004)= **0,369** |
| G | Moyenne (((1+4-3)/4)-0 , **0 = 0,25** |
| D | Moyenne (((0+4-3)/4)-0,002 , ((1+4-4)/4)-0)= **0,249** |

La note de proximité sémantique précitée ne représente pas une distance, par exemple en nombre d'arcs, entre deux concepts $C_1$ et $C_2$, car, pour prendre en compte les contraintes sémantiques, le calcul de cette note n'est pas symétrique mais orienté sur $C_1$ ou sur $C_2$. Pour une explication plus détaillée de ce choix, on pourra utilement se reporter au mémoire de thèse précédemment cité.

Le processus de numérotation précité ne donne pas accès aux autres informations de l'ontologie qui peuvent apparaître dans une version saturée de l'ontologie. Ainsi, ni les contraintes d'exclusion, ni les règles définies sur les prédicats n-aires, ni les contraintes de typage ne sont prises en compte.

En outre, il n'existe actuellement aucun mode de calcul et de codage simple et peu coûteux à implémenter de note de proximité de concepts qui soit représentative à la fois de la proximité sémantique et de la proximité spatiale de ces concepts.

Dans les techniques actuellement connues, les notes de distance favorisent essentiellement l'aspect sémantique, lequel est très important pour raisonner sur une requête, mais elles ne prennent pas en compte de manière significative le rapprochement spatial des concepts, au sein du graphe de concepts, lequel est nécessaire pour une meilleure représentation de l'ontologie. Le calcul et le codage des notes de distance spatiale nécessitent à ce jour des parcours coûteux des différents concepts de l'ontologie.

La présente invention a pour objet la mise en oeuvre d'un procédé de calcul et le codage d'une note de similarité sémantique et spatiale entre concepts d'une ontologie.

Selon un aspect remarquable, le procédé objet de l'invention est mis en oeuvre à partir d'une ontologie mémorisée sous forme de treillis numéroté hiérarchiquement, moyennant un certain nombre d'adaptation des calculs et du codage des notes de distance sémantique.

En particulier, l'invention a pour objet la mise en oeuvre d'un procédé de calcul et de codage d'une note de similarité sémantique et spatiale de concepts d'une ontologie, permettant, de manière particulièrement avantageuse de calculer et coder une note de similarité sémantique et spatiale par rapprochement relativement à leurs caractéristiques sémantiques connues respectivement par éloignement en fonction de leur distance spatiale pour chaque concept vis-à-vis d'un concept central, pris deux à deux.

Un autre objet de la présente invention est la mise en oeuvre d'un procédé de calcul et de codage d'une note de similarité sémantique et spatiale de concepts d'une ontologie permettant de rapprocher deux concepts de cette ontologie, représentée par une hiérarchie de concepts, en donnant une vision à la fois sémantique et spatiale de la hiérarchie entière, le sens du concept n'étant pas seulement pris en compte mais également la localisation de ce dernier dans la hiérarchie de concepts.

L'invention a en outre pour objet la mise en oeuvre d'un procédé de calcul et de codage d'une note de similarité sémantique et spatiale de concepts d'une ontologie permettant en outre, préalablement à l'étape consistant à calculer une note de similarité sémantique et spatiale, de discriminer dans la hiérarchie de concepts, au moins une sous-hiérarchie spéciale. La hiérarchie de concepts est alors subdivisée en une première sous-hiérarchie de concepts contenant au moins une sous-hiérarchie spéciale et en une deuxième sous-hiérarchie de concepts contenant les autres concepts de la hiérarchie de concepts n'appartenant pas à la première sous-hiérarchie, compte tenu de l'appartenance respectivement de la non appartenance de chaque concept à cette sous-hiérarchie spéciale, définie comme un sous ensemble de concepts ancré dont le plus général est le concept C qui doit respecter deux critères à savoir que le nombre de concepts fils de C et la profondeur de C est inférieure à une valeur de seuil et tel que chacun des fils de C respecte également ces deux critères.

Selon le procédé objet de l'invention, une sous-hiérarchie spéciale est définie comme une sous-hiérarchie de la hiérarchie de concepts dont la profondeur de chacun des concepts est inférieure à une valeur déterminée de profondeur maximale de sous-hiérarchie spéciale et dont le nombre de concepts fils pour chacun de ces concepts est inférieur à une valeur déterminée de largeur maximale de sous-hiérarchie spéciale.

Selon un autre aspect particulièrement remarquable de mise en oeuvre du procédé objet de l'invention, l'étape consistant à discriminer, dans la hiérarchie des concepts, au moins une sous-hiérarchie spéciale inclut au moins une renumérotation des concepts, cette renumérotation consistant à préfixer tout identifiant d'un concept appartenant à une sous-hiérarchie spéciale par le plus petit nombre entier positif non encore attribué aux concepts de la hiérarchie de concepts.

Selon un autre aspect remarquable du procédé objet de l'invention, l'étape de calcul et de codage d'une note de similarité sémantique et spatiale inclut au moins une étape consistant à calculer et coder une note de similarité d'un concept vis-à-vis d'un concept central en fonction des caractéristiques sémantiques connues de ces derniers et en éloignant ce concept vis-à-vis de ce concept central en nombre de pas de spécialisation vis-à-vis du concept général commun à ces derniers, par affectation d'une valeur de pénalité, fonction de la profondeur de la hiérarchie de concepts.

Selon un autre aspect remarquable du procédé objet de l'invention, l'étape de calcul et de codage d'une note de similarité sémantique et spatiale inclut en outre une étape consistant à écarter de l'ensemble des concepts de la hiérarchie de concepts tout concept appartenant à une sous-hiérarchie spéciale formant la première sous-hiérarchie de concepts.

De préférence dans un mode de mise en oeuvre optimisé préférentiel, la note de similarité sémantique et spatiale est une valeur normalisée comprise entre 0 et 1, définie comme la moyenne pour chaque chemin du rapport de proximité diminué du produit de la valeur de la pénalité et du nombre d'autres caractéristiques définies de ce concept et augmenté de la pénalité maximale, produit de la profondeur de la hiérarchie de concepts et de la valeur de la pénalité.

Le procédé objet de l'invention est enfin remarquable en ce qu'il consiste à prendre en compte tout concept dont tout ou partie des chemins de l'identifiant de ce concept appartient à au moins une sous-hiérarchie spéciale.

L'invention couvre également un dispositif de calcul et de codage d'une note de similarité sémantique et spatiale entre concepts d'une ontologie mémorisée sous forme de treillis numéroté hiérarchiquement, remarquable en ce que ce dispositif comporte au moins des moyens de calcul et de codage d'une note de similarité sémantique et spatiale par rapprochement relativement à leurs caractéristiques sémantiques communes respectivement par éloignement en fonction de leur distance spatiale pour chaque concept vis-à-vis d'un concept central, pris deux à deux.

Le dispositif de calcul et de codage d'une note de similarité sémantique et spatiale objet de l'invention est en outre remarquable en ce qu'il comporte en outre des moyens de discrimination de sous-hiérarchies spéciales dont la profondeur de chacun des concepts est inférieure à une valeur déterminée de profondeur maximale de sous-hiérarchie spéciale et dont le nombre de concepts fils pour un de chacun de ces concepts est inférieur à une valeur déterminée de largeur maximale de sous-hiérarchie spéciale, et des moyens de renumérotation des concepts, cette renumérotation consistant à préfixer tout identifiant d'un concept appartenant à une sous-hiérarchie spéciale par le plus petit nombre entier positif non encore attribué aux concepts de la hiérarchie de concepts.

Le dispositif de calcul et de codage d'une note de similarité sémantique et spatiale objet de l'invention peut avantageusement être adapté pour la mise en oeuvre du procédé de calcul et de codage d'une note de similarité sémantique et spatiale précédemment cité.

Le procédé et le dispositif objets de l'invention trouvent application à la gestion et à la consultation d'ontologies mémorisées sous forme de treillis numéroté hiérarchiquement, dans les domaines métiers ou d'applications les plus variés.

Ils seront mieux compris à la lecture de la description et à l'observation des dessins ci-après dans lesquels, outre la figure 1 relative à l'art antérieur,

- la figure 2a représente, à titre illustratif, un organigramme de mise en oeuvre du procédé objet de l'invention ;
- la figure 2b représente, à titre illustratif, un organigramme de mise en oeuvre préférentielle du procédé objet de l'invention dans laquelle on procède, préalablement à une étape de calcul et de codage de la note de similarité sémantique et spatiale entre concepts pris deux à deux, à une discrimination de sous-hiérarchies spéciales, afin soit d'écarter ses dernières avant exécution du calcul de la note de similarité sémantique et spatiale entre concepts, soit d'exécuter un calcul de note de similarité sémantique et spatiale spécifique ;
- la figure 3a$_1$ représente, à titre illustratif, un organigramme d'un processus de discrimination de sous-hiérarchies spéciales dans une hiérarchie de concepts, une sous-hiérarchie spéciale ne présentant que peu d'intérêt sémantique, voire pas d'intérêt ;

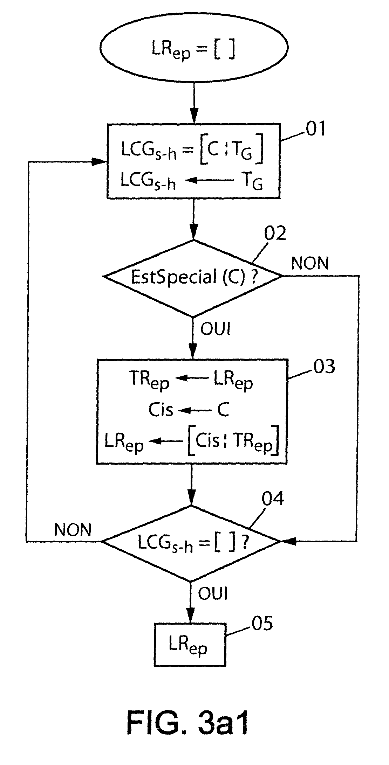

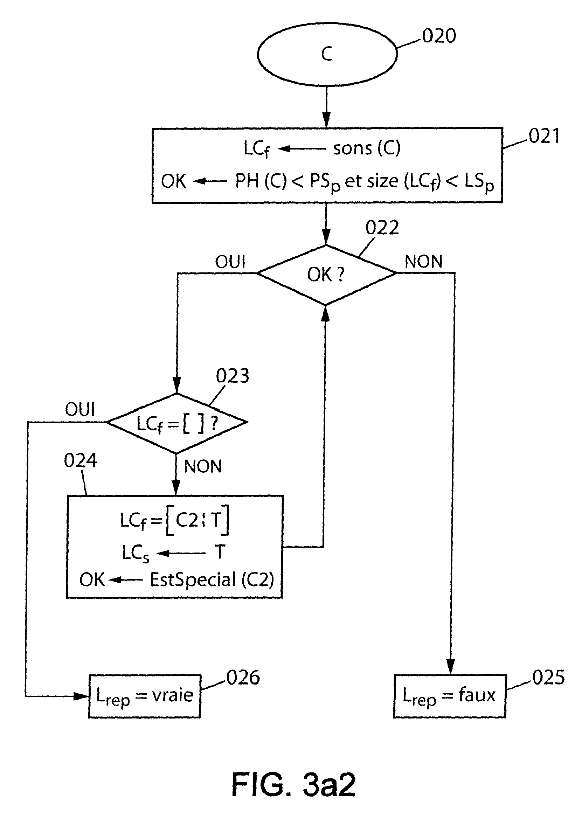

- la figure 3a$_2$ représente, à titre illustratif, un organigramme de test applicable à tout concept, afin de déterminer le caractère spécial de ce dernier ;

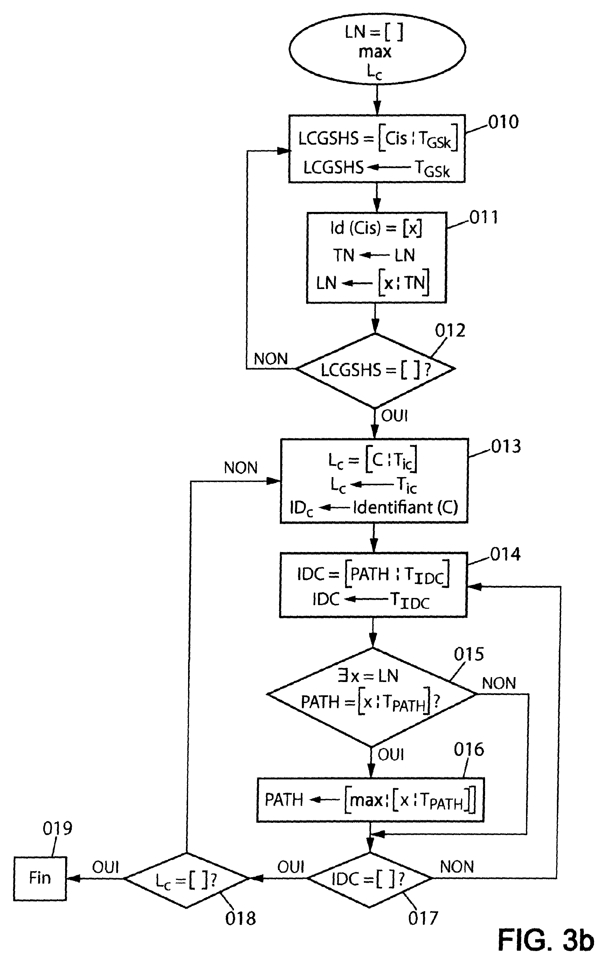

- la figure 3b représente, à titre illustratif, un organigramme d'un processus général de renumérotation des chemins et identifiants des concepts appartenant à une sous-hiérarchie spéciale, par un marquage par insertion d'un préfixe spécifique à tout chemin d'un concept appartenant à une hiérarchie spéciale ;

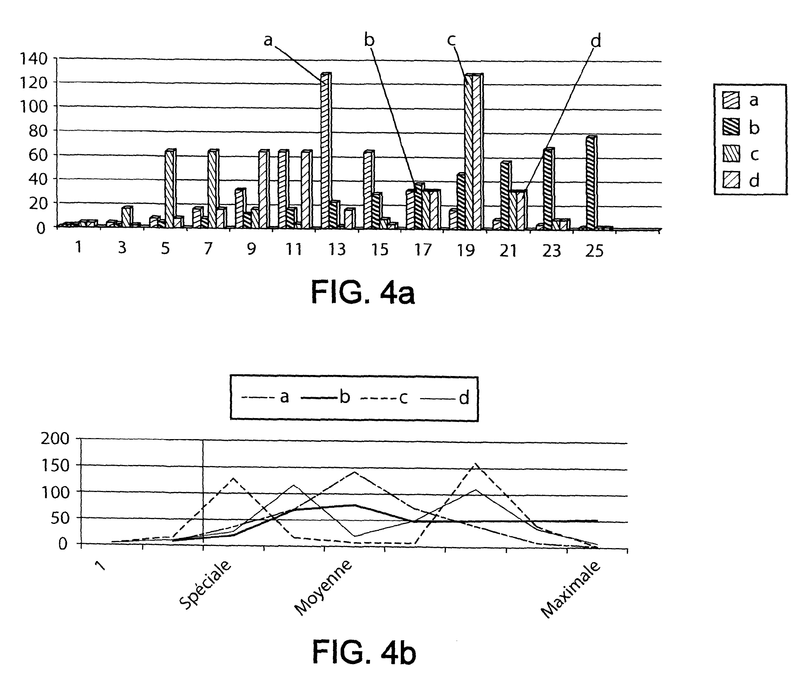

- les figures 4a et 4b représentent à titre illustratif, des courbes de distribution de concepts, respectivement de valeur moyenne pour des distributions en cloche, croissante, ou en dos de chameau, pour une hiérarchie de concepts de profondeur maximale 25 ;

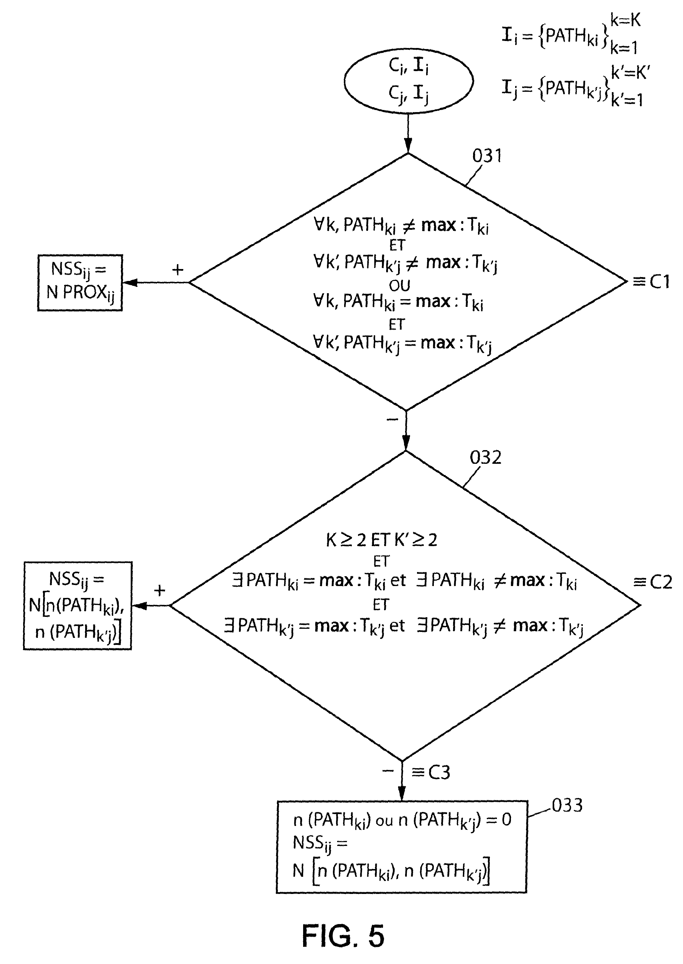

- la figure 5 représente un organigramme de calcul d'une note générale entre deux concepts, quelles que soient les origines de leurs chemins, appartenant ou non à une sous-hiérarchie spéciale ;

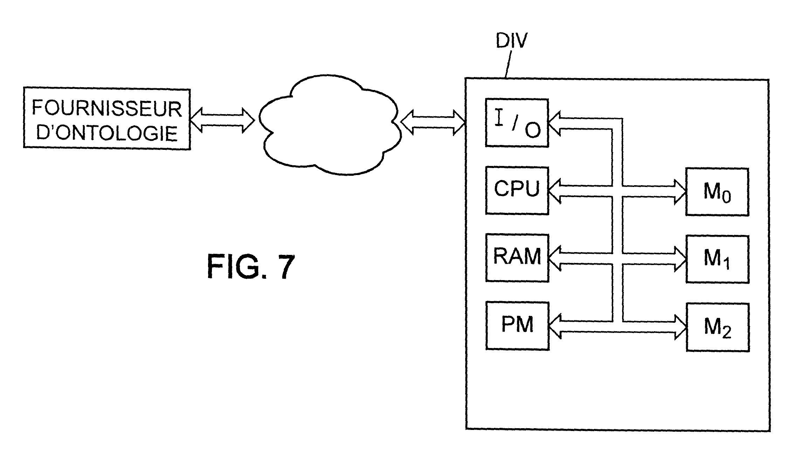

- la figure 6 représente un diagramme illustratif d'une représentation simplifiée de la hiérarchie de concepts de l'art antérieur représentée en figure 1, grâce à la mise en oeuvre du procédé objet de l'invention ;
- la figure 7 représente un dispositif de calcul et de codage d'une note de similarité sémantique et spatiale entre un concept et un concept de référence d'une hiérarchie de concepts.

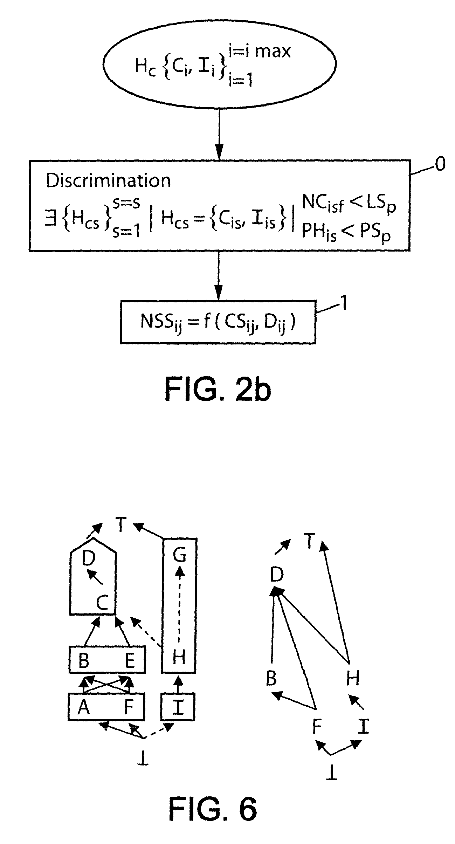

Une description plus détaillée du procédé de codage d'une note de similarité sémantique et spatiale entre concepts d'une ontologie mémorisée sous forme de treillis numéroté hiérarchiquement, conforme à l'objet de la présente invention, sera maintenant donnée en liaison avec la figure 2a, la figure 2b et les figures suivantes.

D'une manière générale, on indique que le procédé objet de la présente invention peut être mis en oeuvre à partir de toute ontologie mémorisée sous forme d'un treillis numéroté hiérarchiquement tel que représenté en figure 1, à chaque concept $C_i$ étant associé à l'identifiant $I_i$ comportant plusieurs chemin, chaque chemin étant formé par une suite d'entiers ou de caractères, ainsi que décrit en liaison avec la figure 1.

D'une manière plus générale, on comprend bien entendu que le procédé objet de la présente invention, peut être exécuté soit à partir de la structure de données représentée en figure 1, sur les couples concept $C_i$ identifiant $I_i$, ou, au contraire, suite à la mise en oeuvre d'un processus de codage par numérotation des concepts d'une ontologie et d'un treillis quelconque conformément au processus décrit dans la demande de brevet français antérieure FR 05 07326 déposée le 08 juillet 2005 mentionnée précédemment dans la description.

Ainsi, le procédé objet de l'invention est mis en oeuvre sur un treillis numéroté, les chemins de chaque identifiant $I_i$ correspondant à une succession d'arcs orientés entre le concept considéré $C_i$ auquel est alloué, au moins, un chemin, et le concept universel T pour former une hiérarchie de concepts sous le concept universel. Chaque chemin associé au concept $C_i$ définit ainsi un trajet par l'intermédiaire de concepts pères respectivement fils successifs permettant d'atteindre le concept $C_i$ considéré.

Le procédé objet de l'invention est donc mis en oeuvre sur une hiérarchie de concepts notée :

$$H_c \left\{ C_i, I_i \right\}_{i=1}^{i=i\,\max} .$$

Ainsi que représenté en figure 2a, le procédé objet de l'invention consiste en une étape 1 à calculer et coder une note de similarité sémantique et spatiale notée $NSS_{ij}$, cette note étant calculée par rapprochement relativement à leurs caractéristiques sémantiques communes, ces caractéristiques étant notés $CS_{ij}$, respectivement par éloignement en fonction de la distance spatiale notée $D_{ij}$, pour chaque concept $C_i$ vis-à-vis d'un concept central ou dit de référence $C_j$, le concept considéré $C_i$ et le concept de référence $C_j$ étant pris deux à deux.

En conséquence, la note de similarité sémantique et spatiale $NSS_{ij}$ vérifie la relation 1 :

$$NSS_{ij} = f \left( CS_{ij}, D_{ij} \right).$$

Dans la relation précédente :

- $CS_{ij}$ désigne les caractéristiques sémantiques communes entre le concept $C_i$ et le concept de référence $C_j$;
- $D_{ij}$ désigne la distance spatiale entre le concept $C_i$ et le concept central $C_j$;
- i et j indiquent l'adresse du concept $C_i$ respectivement l'adresse du concept central $C_j$, ces concepts étant bien entendu repérés par leur identifiant et leurs chemins.

On indique que, d'une manière spécifique, la notion de rapprochement sémantique peut être effectuée par calcul des chemins de même préfixe, ce qui permet d'obtenir des caractéristiques définies communes de chacun des concepts considérés c'est-à-dire le concept $C_i$ et le concept central $C_j$ et d'évaluer ainsi les points communs entre les différents concepts. Ces caractéristiques définies communes correspondent à des caractéristiques sémantiques vis-à-vis d'un ancêtre commun désigné concept racine sur toute une hiérarchie de concepts.

Outre l'aspect sémantique précité, un ou plusieurs concepts d'une hiérarchie de concepts codée conformément à l'objet de la présente invention, présentent un aspect spatial c'est-à-dire une notion d'éloignement vis-à-vis d'un ancêtre commun.

L'aspect spatial d'une hiérarchie de concepts conformément au procédé objet de l'invention, permet alors la prise en compte de l'éloignement de tout concept considéré $C_i$ vis-à-vis d'un ou plusieurs ancêtres communs.

La notion d'espacement spatial ou d'éloignement permet ainsi une prise en compte de la forme générale de la hiérarchie et finalement de la forme physique du treillis numéroté hiérarchiquement.

On rappelle, en particulier, que la forme physique générale précitée est liée à l'organisation hiérarchisée de la relation de subsomption symbolisée par les arcs liant chaque concept, ainsi que représenté en figure 1.

La mise en oeuvre du procédé objet de la présente invention, telle que représentée en figure 2a, peut être exécutée de manière générale sur toute ontologie et, en particulier, toute ontologie mémorisée sous forme de treillis numérotée hiérarchiquement, ainsi que mentionné précédemment dans la description.

Toutefois, un tel mode opératoire ne permet d'obtenir qu'une représentation sous-optimale de l'ontologie précitée, en raison de la présence de sous-hiérarchies spéciales dans cette ontologie, ces sous-hiérarchies spéciales étant formées par des branches, succession d'arcs et de concepts ou noeuds $C_i$, éventuellement importants en nombre mais dont la valeur sémantique est de peu d'intérêt voire d'un intérêt sensiblement nul relativement au domaine décrit par ailleurs.

La notion d'intérêt sensiblement nul s'entend, par exemple, de la représentation de l'ontologie et de l'utilisation de cette dernière, c'est-à-dire l'utilisation du treillis numéroté hiérarchiquement dans des cas concrets, tel que par exemple pour une description du domaine relative au tourisme, l'existence de concepts précisant les couleurs pour qualifier par exemple les autobus du réseau de transport urbain de la ville de Sidney.

Le procédé, objet de la présente invention, permet alors de s'affranchir de l'existence de telles sous-hiérarchies, dites sous-hiérarchies spéciales, soit en écartant ces dernières soit au contraire en adaptant le codage et donc la représentation de celles-ci dans un but d'optimisation de la structure de données et de l'accès à cette structure de données constitutive du treillis numéroté hiérarchiquement représentant cette ontologie.

Le procédé objet de la présente invention, dans sa forme optimisée, consiste alors avantageusement, ainsi que représenté en figure 2b, à effectuer, préalablement à l'étape consistant à calculer une note de similarité sémantique et spatiale, étape 1 précédemment décrite, à discriminer, en une étape 0, dans la hiérarchie de concepts $H_c$ au moins une sous-hiérarchie spéciale, définie précédemment.

A l'étape 0 de la figure 2b, étape de discrimination, l'opération de discrimination proprement dite est notée par la relation 2 :

$$\exists\{H_{cs}\}_{s=1}^{s=S}\left| H_{cs}=\{C_{is},I_{is}\}\right|_{PH_{isf}<PS_p}^{NC_{isf}<LS_p}.$$

Dans la relation 2 précédente :

- $H_{cs}$ indique une sous-hiérarchie spéciale de concepts, une pluralité de 1 à S de ces dernières pouvant être discriminée ;
- $C_{is}$, $I_{is}$ désigne chaque concept et l'identifiant associés à ce concept appartenant à la sous-hiérarchie spéciale considérée ;
- $NC_{isf}$ indique le nombre de concepts fils pour la hiérarchie spéciale considérée ;
- $LS_p$ désigne la largeur maximale de la hiérarchie spéciale $H_{cs}$ considérée ;
- $PH_{isf}$ désigne la profondeur des concepts descendant des concepts les plus généraux de la hiérarchie spéciale ;
- $PS_p$ désigne la profondeur maximale de la hiérarchie spéciale considérée.

On comprend ainsi que, grâce à la mise en oeuvre de l'étape 0 de discrimination d'une ou plusieurs sous-hiérarchies spéciales, la hiérarchie de concepts $H_c$ d'origine, est alors subdivisée en une première sous-hiérarchie de concepts contenant les éventuelles sous-hiérarchies spéciales $H_{cs}$ et en une deuxième sous-hiérarchie de concepts contenant les autres concepts de la hiérarchie de concepts n'appartenant pas à la première précitée.

On comprend ainsi que l'opération de discrimination d'une ou plusieurs sous-hiérarchies spéciales permet ensuite soit d'écarter ces sous-hiérarchies dont l'intérêt du point de vue de l'ontologie n'est pas forcément justifié, ou au contraire d'effectuer un traitement spécifique sur ces derniers afin de rendre le codage de l'ontologie optimum.

Une description plus détaillée de la mise en oeuvre de l'étape de discrimination précitée sera maintenant donnée en liaison avec les figures $3a_1$ à $3b$ à partir d'exemples spécifiques.

Plusieurs spécificités de la hiérarchie de concepts doivent être prises en compte pour le calcul de la note de proximité :

- il existe des sous-hiérarchies spéciales de T qui n'ont pas a priori à être rapprochées des autres sous-hiérarchies, ni même entre elles. Elles doivent profiter d'un traitement spécial ;
- toutes les branches de la hiérarchie n'ont pas la même taille ni la même profondeur.

Les sous-hiérarchies spéciales $H_{cs}$ sont des petites sous-hiérarchies qui ne contiennent pas beaucoup de concepts. Elles permettent d'effectuer une description de petits sous-domaines liés au domaine général mais qui n'ont pas à être décrits de manière exhaustive ou qui ne contiennent que très peu de concepts.

Exemple : Si le domaine général est celui des livres, les sous-hiérarchies consacrées aux booléens (oui / non / vrai / faux) ou autres types classiques ne sont pas intéressantes pour avoir une vision d'ensemble sémantique et spatiale du domaine général.

Les sous-hiérarchies spéciales de l'ensemble initial de concepts peuvent alors être écartées, car elles ne seront finalement pas prises en compte dans le calcul de la note $NSS_{ij}$. Une sous-hiérarchie spéciale est une sous-hiérarchie de $H_c$ située sous T dont la profondeur de chacun de ses concepts est inférieure à la valeur $PS_p$ indiquant la profondeur maximale d'une hiérarchie spéciale et dont le nombre de fils pour un même concept est inférieur à la valeur $LS_p$ qui décrit la largeur maximale d'une hiérarchie spéciale. L'utilisation de ces petites hiérarchies peut être multiple mais ne rentre pas dans le cadre de la présente demande de brevets.

La valeur de seuil $PS_p$ peut être fixée à $PS_{p'}$ = moyenne des profondeurs des concepts de l'ontologie entière divisée par deux et la valeur de seuil $LS_p$ à $LS_p$ = moyenne des largeurs des concepts de l'ontologie entière divisée par deux.

Exemple : La somme des profondeurs des concepts de l'exemple de la figure 1 est de 25 : A (4) B (3) C (2) D (1) E (3) F (4) G (1) H (3) I (4). La moyenne pour les 9 concepts est de 2,77 soit $PS_p$ = 1,39. Les concepts de la sous-hiérarchie D sont situés à plus de 1,39 de profondeur, D mis à part, et même chose pour la sous-hiérarchie G. Il n'y a pas de sous-hiérarchie à écarter. On peut néanmoins, à titre d'illustration, prendre en compte la moyenne des largeurs des concepts divisée par deux. On dispose de 15 arcs en tout dans la hiérarchie de concepts $H_c$ soit une moyenne de 0,83. Comme ce chiffre est inférieur à 1, pour cette hiérarchie et dans cet exemple très précis de la figure 1, il n'est pas non plus possible de lui associer la moindre sous-hiérarchie, chaque concept ayant au moins un arc vers un concept fils, ce concept fils étant 1 pour les concepts les plus spécialisés.

Une description plus détaillée d'un processus spécifique général de détection des sous-hiérarchies spéciales sera maintenant donnée en liaison avec les figures $3a_1$ et $3a_2$.

Le processus de détection d'une ou des sous-hiérarchies spéciales est mis en oeuvre à partir d'une liste notée **liste** $=LCG_{s-h}$ constituée par la liste des concepts les plus généraux qui débutent une sous-hiérarchie, de la valeur de seuil $LS_{p'}$ de la valeur de seuil $PS_{p'}$ et d'une liste de réponses notée $LR_{ep}$ initialisée à une valeur vide notée $LR_{ep}$=[ ].

En référence à la figure $3a_1$, le processus de discrimination consiste, en une étape 01, à lire, c'est-à-dire parcourir, les éléments concepts de la liste $LCG_{s-h}$ notée :

$$LCG_{s-h} = \left[ C \,\vert\, T_G \right]$$

$$LCG_{s-h} \leftarrow T_G .$$

La notation précédente indique que la liste $LCG_{s-h}$ est formée par un élément concept général C débutant une sous-hiérarchie C de tête et une queue de liste $T_G$ comportant une pluralité de ces concepts les plus généraux débutant chacun une sous-hiérarchie.

Ensuite, à la liste $LCG_{s-h}$ est affectée la valeur de queue de liste $T_G$. On indique que dans toute la description le symbole flèche à gauche $\leftarrow$ représente l'opération d'affectation.

L'étape 01 est suivie d'une étape 02, consistant pour tout concept *(C)* appartenant à la liste des concepts fils $LCG_{s-h}$ à effectuer un test dit de spécialité du concept *(C)* par application de la relation logique 3 :

Est special (*C*) ?

Dans la relation 3 précitée, sur réponse négative au test 02, une étape 04 de test $LCG_{s-h}$ = [ ] ? est appelée de passage au concept (C) suivant de la liste $LCG_{s-h}$ par retour à l'étape 01 précitée.

Au contraire, sur réponse positive au test 02, au concept C est attribué à l'étape 03, le caractère spécial selon la relation 4 :

$$C = \left\{ C_{is}, PS_p, LS_p \right\}.$$

Dans la relation 4, $C_{is}$ désigne le caractère spécial du concept $C = C_{is}$ pour les valeurs de seuil $PS_p$ et $LS_p$.

L'étape 03 comprend une sous-étape consistant à concaténer le concept spécial $C_{is}$, c'est-à-dire finalement le concept C courant, à la liste de réponses et en particulier à la queue de liste $TR_{ep}$ selon la relation 5 :

$$LR_{ep} \leftarrow \left[ C_{is} \mid TR_{ep} \right].$$

Le processus d'affectation par concaténation d'un concept spécial exécuté à l'étape 03 est poursuivi tant que la liste des concepts fils n'est pas vide cette opération étant représentée par un retour de l'étape 04 à l'étape 01 d'appel du concept suivant C.

L'ensemble du processus est poursuivi tant que la liste des concepts les plus généraux qui débutent une sous-hiérarchie, c'est-à-dire la liste $LCG_{s\text{-}h}$ n'est pas vide, cette opération étant représentée à la figure 3a$_1$ par le test 04 selon la relation 6 de la figure 3a$_1$ :

$$LCG_{s-h} = \left[ \; \right]? \, .$$

La réponse négative au test 04 est suivie d'un retour à l'étape 01 c'est-à-dire de passage à l'élément de liste formé par le concept C suivant, concept le plus général qui débute une sous-hiérarchie, par lecture de la queue de liste $T_G$.

Au contraire, sur réponse positive au test 04, on dispose de la liste de réponse $LR_{ep}$, laquelle comprend bien entendu tous les éléments de concept $C_{is}$ auquel le caractère spécial a été attribué.

L'exécution de la fonction « EstSpecial » applicable à tout concept C le plus général au test 02 de la figure 3a$_1$ sera maintenant décrite en liaison avec la figure 3a$_2$. A partir de tout concept C appartenant à la liste $LCG_{s\text{-}h}$ lue à l'étape 01 de la figure 3a$_1$ et à l'étape 020 de la figure 3a$_2$, on procède, en une étape 021 à la détermination de la liste des concepts fils de C, notée $LC_f \leftarrow sons(C)$ et à la discrimination du caractère spécial du concept C selon la relation 5 :

$$LC_f \leftarrow sons(C)$$

$$OK \leftarrow Ph(C) < PS_p \; ET \; size(LC_f) < LS_p \, .$$

L'évaluation de la valeur logique de la réponse OK est effectuée à l'étape 022, OK ?.

Sur réponse négative à l'étape 022 on est en présence à l'étape 025 d'une réponse négative à l'étape 02 de la figure 3a1, notée $L_{rep}$ = faux.

Au contraire, sur réponse positive au test 022, un test 023 $LC_f$ = [ ] ? est appelé. Si, en réponse positive au test 023, la liste $LC_f$ des concepts fils de C est vide, la hiérarchie dont le concept C est le concept le plus général est une hiérarchie spéciale, la liste de réponse $L_{rep}$ étant validée à la valeur vraie à l'étape 026.

Au contraire, sur réponse négative au test 023, la liste des concepts fils $LC_f$ du concept C le plus général n'étant pas vide, un appel récursif de fonction « EstSpecial » est appliqué au premier concept $C_2$ de la liste $LC_f$ des concepts fils de $C$ à l'étape 024, et récursivement sur tous les concepts de cette liste jusqu'à la liste $LC_f$ = [ ] vide par retour au test 022.

Le processus illustré par les organigrammes des figures 3a$_1$ et 3a$_2$ peut bien entendu être avantageusement mis en oeuvre grâce à un programme informatique dont le pseudo-code est donné ci-après.

Algorithme général de détection des sous-hiérarchies spéciales :

- **liste** ← Liste des concepts les plus généraux qui débutent une sous-hiérarchie ;
- **PSpeciale** ← moyenne des profondeurs des concepts divisée par deux ;

- **LSpeciale** ← moyenne des largeurs des concepts, divisée par deux ;
- **Reponse** ← Liste_Vide ;
- Parcourir les éléments **concept de liste ;**
  Si (estSpecial(**concept**, **PSpeciale, LSpeciale**)) alors
  **Reponse** ← **Reponse.add(concept) ;**
- FinParcourir ;
- Retourner Réponse.
  Algorithme estSpecial (concept, PSpeciale, LSpeciale) :
- **liste** ← liste des fils(concept)
- **OK** ← profondeur**(concept)**<PSpeciale **ET** taille(**liste**)<LSpeciale
- Tant que **OK** et ExisteProchainConcept(**liste**) faire
  **C** ← prochainConcept(**liste**)
  **OK** ← estSpecial(**C**, **PSpeciale**, **LSpeciale**)
- FinTantQue
- Retourner **OK**

Dans le pseudo code précité, seules les désignations littérales des éléments de la figure 3a$_1$ et 3a$_2$ sont représentées.

Dans le but de repérer facilement les sous-hiérarchies spéciales précitées, et de leur appliquer un traitement spécifique ultérieur, conformément au procédé objet de la présente invention, afin de faciliter le calcul et le codage des notes de similarités sémantiques et spatiales entre concepts, le procédé objet de l'invention peut alors avantageusement consister à effectuer une renumérotation, dans le but de marquer par insertion d'un préfixe, de certains chemins de la hiérarchie de concepts, c'est-à-dire des chemins de concepts appartenant à une sous-hiérarchie spéciale.

On comprend, en particulier, que cette opération permet alors de discriminer facilement par simple parcours de chemins considérés tout concept $C_{is}$ appartenant à une hiérarchie spéciale afin d'appliquer à ce dernier, ou finalement à tout sous-ensemble de concepts d'une sous-hiérarchie spéciale, un traitement spécifique.

Dans ce but, on part de la propriété première de la numérotation: un identifiant est unique pour tout concept de la hiérarchie. Le procédé objet de l'invention consiste alors à préfixer simplement les identifiants de ces sous-hiérarchies spéciales par le plus petit nombre entier positif qui n'a pas encore été attribué lors de la numérotation. Ainsi, l'identifiant d'un concept, après renumérotation, permet de déterminer directement, pour chacun de ses chemins, si celui-ci appartient ou non à une sous-hiérarchie spéciale.

Exemple : Pour préfixer certains concepts de l'ontologie représentée en figure 1, le nombre 3 étant le plus grand nombre affecté, tous les chemins de cette sous-hiérarchie sont préfixés par le nombre max = 4. En considérant maintenant une autre hiérarchie avec une sous-hiérarchie spéciale sous le concept P("3"), avec max = 9 et les descendants suivants de P : P2("31") P3("32") P4("311","42"), la renumérotation par introduction d'un préfixe affecte les numéros suivants P("93"), P2("931 ") P3("932") P4("42", "9311").

Une description générale du processus de renumérotation sera maintenant donnée en liaison avec la figure 3b.

En référence à la figure 3b, on indique que le processus général de renumérotation est appliqué à une liste notée liste = $LCGSHS$ , constituée par la liste des concepts les plus généraux qui débutent une sous-hiérarchie spéciale. Cette liste peut être établie à partir de la liste de réponse $LR_{ep}$ obtenue précédemment à l'étape 05 de la figure 3a$_1$.

Le processus de renumérotation est également mis en oeuvre à partir de la valeur numérique max, plus petit nombre entier positif qui n'a pas encore été attribué lors de la numérotation du treillis codé.

Le processus de renumérotation est enfin mis en oeuvre à partir d'une racine de la hiérarchie de concepts, racine notée $r$, de la liste des concepts $L_c = LC_i$ liste des concepts de la hiérarchie de concepts, et d'une liste des préfixes recherchés des concepts $C_{is}$ appartenant à une sous-hiérarchie spéciale, cette liste étant notée $LN$ et instanciée à la valeur liste vide [ ] au départ de la mise en oeuvre du processus de renumérotation.

En référence à la figure 3b, le processus de renumérotation comporte alors une étape 010 consistant à parcourir la liste $LCGSHS$ des concepts les plus généraux qui débutent une sous-hiérarchie spéciale pour chaque élément de concept appartenant à cette liste.

L'opération exécutée à l'étape 010 consistant en une lecture de la liste $LCGSHS$ est représentée par la relation 7 :

$$LCGSHS = \left[ C_{is} \mid T_{GSk} \right].$$

Dans la relation 7 précitée $C_{is}$ désigne l'élément de liste concept le plus général qui débute une sous-hiérarchie spéciale. Cet élément permet à l'étape 011 de déterminer l'identifiant de ce dernier noté $I_d(C_{is})$ où $x$ désigne le préfixe limité à un entier représentatif du chemin de cet élément à partir de l'élément racine *r*, puis successivement, *x* désignant ainsi l'entier représentatif du concept $C_{is}$ vis-à-vis du concept père de ce dernier. $T_{GSk}$ désigne la queue de liste.

L'étape 011 consiste en outre à ajouter à la liste de départ *LN* la valeur de l'entier *x* représentatif du chemin du concept $C_{is}$ le plus général par concaténation à la valeur de queue de liste *TN* de la liste *LN* selon la relation 8 :

$$TN \leftarrow LN$$

$$LN \leftarrow [x \,|\, TN].$$

Par l'opération précitée, selon la relation 8, on comprend que l'on ajoute à la liste *LN*, liste des préfixes recherchés sachant que ce préfixe est limité à un entier vis-à-vis du concept père de ce dernier, le chemin *x* de l'identifiant du concept $C_{is}$ considéré.

L'étape 011 est alors suivie d'une étape 012 de test de vérification de l'existence d'un autre concept général débutant une sous-hiérarchie spéciale dans la liste *LCGSHS*. Cette opération est représentée par la relation 9 :

$$LCGSHS = [\ \ ]?.$$

Sur réponse négative, un retour à l'étape 010 est appelé pour retour au parcours de $T_{GSK}$ à l'étape 010.

Au contraire sur réponse positive au test 012, une étape 014 est appelée dans laquelle on dispose de la liste *LN* complète, liste des préfixes recherchés des concepts appartenant à une sous-hiérarchie spéciale. Cette liste correspond à la liste des entiers successifs ou préfixes des entiers successifs sachant que le préfixe est limité à l'entier correspondant.

Le processus de renumérotation proprement dit des concepts peut être alors exécuté ainsi que représenté en figure 3b à partir du noeud racine *r* c'est-à-dire du concept universel, de la valeur max du plus petit nombre entier positif qui n'a pas encore été attribué lors de la numérotation du treillis codé et de la liste *LN* obtenue précédemment.

En référence à la figure précitée, le processus de renumérotation consiste en une étape 013 à parcourir la liste des concepts de la hiérarchie de concepts d'origine, c'est-à-dire la liste $L_c = [C | T_{ic}]$, à chaque concept C étant bien entendu associé un identifiant $ID_c$ et les chemins de ce dernier selon la relation $ID_c \leftarrow Identifiant(C)$.

L'étape 013 est alors suivie d'une étape 014 consistant à parcourir la liste des chemins précités notée $IDC = \{PATH | T_{IDC}\}$ de l'identifiant $ID_c$, selon la relation $IDC \leftarrow T_{IDC}$.

L'étape 014 est suivie d'une étape de test 015 consistant à vérifier si tout chemin considéré, noté *PATH*, de l'identifiant $ID_c$, chemin noté $IDC = \{PATH | T_{IDC}\}$ est préfixé par la valeur de liste *LN*, liste des préfixes recherchés. On rappelle que dans cette opération la liste *LN* des préfixes recherchés est considérée élément par élément et se réduit donc à un entier appartenant à la liste *LN*. Le test exécuté à l'étape 015 vérifie la relation 10 :

$$\exists X = LN$$

$$PATH = [X \,|\, T_{PATH}]?.$$

Sur réponse positive au test 015, une étape 016 est appelée laquelle consiste à insérer la valeur de l'entier max en préfixe du chemin *PATH* considéré. L'opération correspondante est représentée par la relation 11 :

$$PATH \leftarrow [\mathbf{max} \,|\, [X \,|\, T_{PATH}]].$$

On comprend, en particulier, que l'insertion précitée peut être faite par concaténation des éléments de liste correspondants puisque max est une valeur entière ajoutée en tête de la liste des entiers constitutive du chemin *PATH*.

L'étape 016 est suivie d'une étape 017 consistant à détecter la fin de la liste *IDC*, liste des chemins du concept *C* considéré. Sur réponse négative au test 017 précité *IDC* = [ ]?, un retour à l'étape 014 de parcours de la liste *IDC* est effectué pour poursuite du processus.

Au contraire, sur réponse positive au test 017, un test de détection de la fin de la liste des concepts $L_C$ est exécuté à l'étape 018 selon la relation 13 :

$$L_C = \begin{bmatrix} & \end{bmatrix}?\,.$$

Sur réponse négative au test 018 un retour est effectué à l'étape 013 pour passage au concept suivant *C* de la liste des concepts $L_C$.

Lorsque la fin de la liste des concepts $L_C$ est atteinte en réponse positive au test 018, on dispose à ce moment là à l'étape 019 d'un ensemble de concepts appartenant à une ou plusieurs hiérarchies spéciales dont les chemins ont été renumérotés par insertion du préfixe max dans tous les chemins correspondants de ces concepts.

Enfin, sur réponse négative au test 015, lorsque la relation 10 n'a pas été vérifiée, le processus est suivi d'un appel direct de l'étape 016 pour poursuite du processus pour le chemin suivant de la liste des chemins *IDC*.

Bien entendu, le processus de renumérotation représenté en figures 3b et précédemment décrit est mis en oeuvre par un module de programme informatique dont le pseudo code est donné ci-après, avec *LN* = Liste**N** et $ID_{c.}$ = *Id* :

Algorithme général de renumérotation :

- **liste** ← Liste des concepts les plus généraux qui débutent une sous-hiérarchie spéciale
- **max** ← plus petit nombre entier positif qui n'a pas encore été attribué lors de la numérotation
- **r** ← noeud racine de la hiérarchie
- **ListeN** ← Liste Vide
- Parcourir les éléments **concept** de **liste**
  ajouter à **ListeN** l'entier associé au chemin de l'identifiant de **concept**
- FinParcourir
- RenuméroterLesConcepts(r, **max, ListeN**)

Algorithme RenuméroterLesConcepts (r : noeud racine, max : entier à ajouter, ListeN : liste des préfixes n recherchés) :

- **Concept** ← r.conceptAssocié();
- **Id** ← Concept.identifiantAssocié();
- Parcourir les éléments **chemin** de **Id**
  Si **chemin**.ApourPréfixe(**ListeN**) alors **chemin**.Insérer(**max**)
- FinParcourir
- **liste** ← liste des noeuds situés sous le noeud racine **r**
- Parcourir les éléments **noeud** de **liste**
  RenuméroterLesConcepts(**noeud**, **max**, **ListeN**)
- FinParcourir

Il n'est toutefois pas possible de détecter les sous-hiérarchies spéciales et de les re-numéroter au fil du traitement, puisque, pour déterminer si un concept feuille appartient à une sous-hiérarchie spéciale, il faut avoir parcouru la totalité de la sous-hiérarchie située entre le concept universel, cette feuille et les autres feuilles de cette même sous-hiérarchie.

Ainsi, grâce au procédé objet de l'invention, il est possible d'isoler une partie des chemins de la hiérarchie puis d'appliquer un traitement spécifique aux concepts isolés associés à ces chemins des identifiants pour calculer la note de proximité entre un concept et un de ces concepts isolés.

En référence aux figures 4a et 4b, on peut envisager 3 cas de distribution des concepts (verticale) sur l'ontologie en fonction de leur profondeur ou de leur largeur (horizontale). La profondeur maximale sur ces trois exemples est de 25. On observe figure 4a et 4b, une courbe en cloche (a en hachure 30° et trait mixte), croissante (b en hachure épaisse et trait épais) ou en chameau (c en hachure 120° et trait tireté et d en hachure 45° et trait continu fin) :

La courbe (a) offre une moyenne des concepts à 13 de profondeur ou largeur. $P/LS_p(a)$= 6,5. La courbe (b) offre une moyenne des concepts à 19,06 de profondeur ou largeur. $P/LS_p(b)$ = 9,53. La courbe (c) offre une moyenne des concepts à 13,08 de profondeur ou largeur. $P/LS_p(c)$ = 6,54. La courbe (d) offre une moyenne des concepts à 14,71 de profondeur ou largeur. $P/LS_p(d) = 7{,}36$. À partir de ces valeurs, l'on obtient quatre courbes qui présentent à la verticale le nombre de concepts en fonction de leur distribution sur la profondeur ou largeur spéciale, moyenne ou maximale. On note que l'axe horizontal n'a pas une échelle régulière vis-à-vis de la profondeur ou de la largeur des concepts. En effet, les moyennes pour les quatre courbes sont différentes, ainsi que les valeurs $P/LS_p$ et pourtant ces valeurs sont représentées au même endroit sur le diagramme pour les quatre courbes.

Pour les courbes (*a*) et (*c*), les moyennes étant à 13, l'axe horizontal reste à pas constants. En revanche, pour la courbe (*b*) (et respectivement la courbe (d), la moyenne étant à 19 (resp. 14,7) les trois valeurs correspondant aux profondeurs 21, 23 et 25 (resp. six valeurs entre 15 et 25) sont lissées sur 4 intervalles entre moyenne et maximale alors que les 10 valeurs entre 1 et 19 (resp. sept entre 1 et 13) sont lissées elles sur 5 intervalles. Cette observation est manifeste sur la courbe (*b*) qui donne cette impression de chute après la valeur moyenne alors que la courbe du diagramme précédent est croissante.

La détection des sous-hiérarchies spéciales est particulièrement pertinente dans les contextes où le début de la courbe situé avant la valeur spéciale n'est pas très élevé, car le nombre de concepts concernés est alors assez marginal. On observe donc qu'avec les répartitions *(a), (b)* et *(d)*, c'est parfait. En revanche, une répartition comme celle de (c), dont le premier pic est inférieur ou égal à $P/LS_p$, écarte de nombreuses sous-hiérarchies. Ce serait le cas également avec une répartition décroissante, avec une courbe (b) inversée par exemple.

On note enfin que la moyenne ne coupe pas forcément le diagramme en deux parts égales avec autant de concepts à gauche qu'à droite. (par exemple avec 1000 concepts de profondeur 1 et 50 concepts de profondeur 1 à 50, la moyenne des profondeurs est de 1000+1275=2275 soit moyenne d'environ 2,2, avec 1002 concepts à gauche de la moyenne et 48 à droite).

Une description plus détaillée d'un mode opératoire du calcul et du codage d'une note de similarité sémantique et spatiale par rapprochement relativement à leur caractéristique sémantique commune respectivement par éloignement en fonction de leur distance spatiale pour chaque concept $C_i$ vis-à-vis d'un concept central $C_j$, pris deux à deux, sera maintenant donnée ci-après en liaison avec la figure 5.

En toute hypothèse, le procédé objet de l'invention permet de définir une nouvelle métrique exploitant la numérotation sur la hiérarchie. Aucun chemin associé à une sous-hiérarchie spéciale peut n'être pris en compte dans cette première présentation du mode de calcul et du codage. Ces chemins sont toutefois facilement identifiables puisqu'ils commencent par le nombre entier max. Dans cette première partie de la présentation du mode de calcul et de codage, les identifiants à considérer pour un concept C sont donc composés des chemins de l'identifiant de C qui ne commencent pas par max. Si tous les chemins de C commencent par max, alors le concept C peut être entièrement écarté. On considère ainsi qu'il n'appartient pas à l'ontologie.

La métrique définie conformément au procédé objet de l'invention permet de rapprocher deux concepts de la hiérarchie de manière spatiale en plus d'un rapprochement sémantique. Elle s'appuie sur la note de similarité présentée connue de l'art antérieur précédemment exposée.

Pour garder l'aspect sémantique, les concepts sont d'abord rapprochés en fonction des caractéristiques qu'ils ont en commun, comme dans le calcul d'une note présenté ci-avant. Cependant, pour prendre en compte l'éloignement spatial (en nombre de pas de généralisation) d'un concept, la pénalité associée aux caractéristiques supplémentaires est augmentée. Cette pénalité a toutefois pour effet d'engendrer une grande différence entre un pas de généralisation (passage d'un concept à son père) et un pas de spécialisation (passage d'un concept à son fils).

Ainsi, dans la phase décrite précédemment consistant à prendre en compte chaque caractéristique définie du concept $C_1$ absente du ppcg pour finaliser la note, avec *Ph* la profondeur de la hiérarchie, on observe que la perte d'une caractéristique par un concept de cette hiérarchie sur un chemin donné est de $1/Ph$. Pour réajuster la perte des caractéristiques par généralisation et par spécialisation afin d'obtenir des centres de groupements relativement hauts, mais répartis sur toute la hiérarchie, la pénalité par caractéristique supplémentaire, notée pen, doit être augmentée sans pour autant dépasser $1/Ph$ : **pen** $\leq 1/Ph$.

Par ailleurs, dans le calcul précédent, les notes négatives n'étaient pas retenues et étaient instanciées à 0. Cela se justifiait par un rapprochement exclusivement sémantique des concepts, car deux concepts issus de hiérarchies différentes n'ont aucun point commun.

Exemple : un peigne est aussi éloigné sémantiquement d'un Tarif que d'un TarifEconomique ou d'un TarifPourCouple.

En revanche, lorsqu'on fait intervenir une composante spatiale, un concept proche de T est plus proche des concepts de hiérarchies différentes que ses descendants.

Exemple: Tarif est spatialement plus proche, en nombre d'arcs de parcours de la hiérarchie codée, de peigne que ne le sont TarifEconomique ou TarifPourCouple, concepts spécialisants du concept Tarif.

Selon le processus de calcul et de codage d'une note de similarité sémantique et spatiale objet de l'invention, il ne faut donc pas annuler les pénalités qui aboutissent sur des notes négatives, car ces notes négatives correspondent également à un ordre qui a un sens d'un point de vue spatial.

Pour garder des valeurs comprises entre 0 et 1, il est néanmoins opportun d'appliquer une certaine normalisation des résultats obtenus. Dans ce but, on ajoute donc la valeur maximale d'une pénalité au calcul global, ce qui permet d'obtenir des notes exclusivement positives, et on divise la note obtenue pour qu'elle soit comprise entre 0 et 1. La pénalité maximale n'est obtenue que sur les concepts feuilles de la hiérarchie situés à la profondeur maximale $Ph$ de la hiérarchie. Au moins un de leurs chemins contient $Ph$ caractères (ou entiers). Le malus attribué est alors de $Ph$ multiplié par la valeur de la pénalité par caractéristique supplémentaire, ce qui nous fait au plus $Ph \times$ **pen.** On obtient donc $Ph \times$ **pen** $\leq Ph \times 1/Ph$ et donc $Ph \times$ **pen** $\leq 1$. La note sur un chemin est obtenue par la relation :

$$\text{Rapport de Proximité} - \textbf{pen} \times |\text{autres caractéristiques définies de } C_1| + Ph \times \textbf{pen} = \text{Note sur un chemin.}$$

On vérifie alors que la note est comprise entre 0 et $(1 + Ph \times \textbf{pen})$ en s'appuyant sur les résultats déjà obtenus par la note précédente : le Rapport de Proximité est compris entre 0 et 1, si les notes sur un chemin sont comprises entre 0 et 1 alors la note globale sera comprise entre 0 et 1. (0) si le rapport est nul, si $C_1$ est une feuille située à la profondeur $Ph$, la partie |autres caractéristiques définies de $C_1$| est égale à $Ph$ et la note sur un chemin est nulle. $(1 + Ph \times \textbf{pen})$ si le rapport de proximité est maximal, la partie |autres caractéristiques définies de $C_1$| est nulle, et la note sur un chemin vaut $(1 + Ph \times \textbf{pen})$.

Pour obtenir une note comprise entre 0 et 1 qui ne change pas l'ordre initial obtenu, on divise chaque note sur un chemin $NSS_{ij}$ par $(1 + Ph \times \textbf{pen})$ ce qui permet d'assurer une note comprise entre $0/(1 + Ph \times \textbf{pen})$ (0) et $(1 + Ph \times \textbf{pen})$ $/(1 + Ph \times \textbf{pen})$ (1).

La note globale correspondant à la moyenne des notes sur chaque chemin, reste asymétrique compte tenu de sa composante sémantique.

Différentes valeurs pour la pénalité ont été étudiées. Parmi ces valeurs, **pen** $= 1/(2 \ast Ph)$ est très appropriée à l'utilisation d'un ontologie mémorisée sous forme de treillis numéroté hiérarchiquement. En prenant ce mode de calcul, avec $Ph = 4$, la pénalité passe à $1/8 = 0{,}125$, $Ph \times$ **pen** $= 0{,}5$ et $(1 + Ph \times \textbf{pen}) = 1{,}5$ et le tableau suivant T2 est obtenu. G et D gagnent 4 places dans le classement par rapport au calcul des notes de similarité décrites précédemment dans la description et représentées au tableau T1, et se sont rapprochés de I. On ajoute $4 - 3 = 1$ au premier calcul sur le premier chemin, $4 - 4 = 0$ au second :

**Tableau T2**

| Concept | Évolution | Note de proximité sémantique et spatiale |
|---|---|---|
| I | = | Moyenne( (((3+1)/4)-0 + 0,5) /1,5, (((4+0)/4)-0 + 0,5) /1,5) = 1 |
| H | = | Moyenne( (((2+1)/4)-0 + 0,5) / 1,5, (((3+0)/4)-0 + 0,5) / 1,5) = 0,833 |
| C | = | Moyenne( (((0+1)/4)-0,25 + 0,5) / 1,5, (((2+0)/4)-0 + 0,5) / 1,5) = 0,5 |
| G | +4 | Moyenne( (((1+1)/4)-0 + 0,5) / 1,5, (((0+0)/4)-0,125 + 0,5) / 1,5) = 0,46 |
| D | +4 | Moyenne( (((0+1)/4)-0,125 + 0,5) /1,5, (((1+0)/4)-0 + 0,5) /1,5) = 0,46 |
| B | -2 | Moyenne( (((0+1)/4)-0,375 + 0,5) /1,5, (((2+0)/4)-0,125 + 0,5) /1,5) = 0,42 |
| E | -2 | Moyenne( (((0+1)/4)-0,375 + 0,5) /1,5, (((2+0)/4)-0,125 + 0,5) /1,5) = 0,42 |
| A | -2 | Moyenne( (((0+1)/4)-0,5 + 0,5) /1,5, (((2+0)/4)-0,25 + 0,5) / 1,5) = 0,33 |
| F | -2 | Moyenne( (((0+1)/4)-0,5 + 0,5) /1,5, (((2+0)/4)-0,25 + 0,5) / 1,5) = 0,33 |

En référence à l'exemple de mise en oeuvre précédemment décrit dans la description et du tableau T2 explicitant les valeurs de notes de proximité sémantique et spatiale $NSS_{ij}$ finalement obtenu, on comprend ainsi que le processus de calcul et de codage de chacune des notes précitées est exécuté vis-à-vis d'un concept central appartenant à la deuxième sous-hiérarchie de concepts, est effectué en rapprochant le concept $C_i$, c'est-à-dire les concepts $IHCGDBEAF$ de la figure 1, vis-à-vis du concept central, lequel n'est autre que le concept I en l'exemple précité. Ce rapprochement est effectué en fonction des caractéristiques sémantiques communes de ces derniers et l'éloignement du concept $C_i$ considéré vis-à-vis de ce concept central, le concept I dans l'exemple donné, est effectué par éloignement en nombre de pas de spécialisation vis-à-vis du concept général commun de ces derniers, le concept 1, par affectation d'une valeur de pénalité, la valeur **pen**, fonction de la profondeur de la hiérarchie du concept.

On comprend, en particulier, que le mode de calcul précédemment décrit et de codage de la note de similarité sémantique et spatiale des concepts pris deux à deux, par rapport à un concept centre, peut être effectué sur l'ontologie d'origine $H_c$, hiérarchie de concept d'origine, ou au contraire, en écartant de cette dernière de l'ensemble des concepts de cette hiérarchie de concepts, les concepts qui appartiennent à une sous-hiérarchie spéciale $H_{cs}$ formant la première sous-hiérarchie de concepts précédemment mentionnée dans la description.

Le codage des notes de similarité sémantique et spatiale $NSS_{ij}$ résulte, d'une part, de leur calcul, et, d'autre part, de leur agencement et leur classement en fonction de leur valeur relative.

En référence aux figures 2a et 2b, on rappelle alors que, dans le cas de la figure 2a où le calcul est effectué en l'absence de tout écartement de concept au titre de leur appartenance à une sous-hiérarchie spéciale, le résultat obtenu est sous-optimum mais qu'au contraire, dans le cas de la figure 2b, où l'on procède à l'étape 0 à une discrimination de sous-hiérarchie spéciale et ensuite à un écart des concepts $C_{is}$ appartenant à une sous-hiérarchie spéciale, le codage obtenu est optimum.

En référence au tableau T2 précité et au mode de calcul de chaque note de chemin $NSS_{ij}$, on indique que la note de similarité sémantique et spatiale est une valeur normalisée comprise entre 0 et 1, définie comme la moyenne pour chaque chemin du rapport de proximité diminué du produit de la valeur de la pénalité et du nombre d'autres caractéristiques définies du concept augmenté de la pénalité maximale produit de la profondeur de la hiérarchie de concepts et de la valeur de la pénalité appliquée.

Le procédé objet de la présente invention peut également être mis en oeuvre, en particulier pour le calcul de la fonction de distance et en définitive de la note de similarité sémantique et spatiale entre deux concepts pris deux à deux, de manière à prendre en compte tout concept de la hiérarchie de concept d'origine $H_c$ dont tout ou partie des chemins de l'identifiant de ce concept appartient à au moins une sous-hiérarchie spéciale.

Ce mode opératoire permet alors d'optimiser totalement le codage de la hiérarchie de concepts sans perte d'information significative non seulement en ce qui concerne la similarité sémantique mais également en ce qui concerne la similarité spatiale des concepts représentés dans l'ontologie ou hiérarchie de concepts d'origine.

On considère, dans ce second mode de calcul et de codage de la note de proximité entre concepts, les concepts dont tout ou partie des chemins de l'identifiant appartient à au moins une sous-hiérarchie spéciale. Dans ce second mode de calcul et de codage, les identifiants à considérer pour un concept C sont donc composés des chemins de l'identifiant de C qui commencent par **max**.

Sur les sous-hiérarchies spéciales, l'aspect spatial a déjà été traité, il ne reste plus qu'à rapprocher sémantiquement les concepts, en utilisant par exemple la note de proximité sémantique telle qu'elle a été définie dans la thèse d' Alain Bidault de l'université Paris-Sud *Affinement de Requêtes posées à un Médiateur,* (numéro d'ordre 6932), juillet 2002, précédemment mentionnée dans la description.

Pour obtenir une note générale entre deux concepts quelles que soient les origines de leurs chemins, on détermine trois cas ou conditions $C_1$, $C_2$, $C_3$ qui peuvent se présenter :

$C_1$ : Si aucun des deux identifiants des concepts n'a de chemin issu d'une sous-hiérarchie spéciale ou si les deux ont tous leurs chemins issus d'une sous-hiérarchie spéciale, alors on ne peut obtenir qu'une des deux notes et c'est elle qui correspond à la note de proximité entre ces deux concepts. Exemple : P2("981 ") et P3("982") ou P5("4") et P6("321 ").

$C_2$: Sinon, si chaque identifiant possède au moins deux chemins dont un issu d'une sous-hiérarchie spéciale et un autre qui n'appartient pas à une sous-hiérarchie spéciale, alors on effectue une moyenne pondérée entre les deux notes obtenues en fonction du nombre de chemins participants dans chacune des notes. Exemple : P4("42", "981 ") et P7("2145", "9624", "985"). Pour cette note, il y a 2 chemins normaux pour 3 chemins spéciaux. On additionne donc la première note pondérée par 2/5 à la seconde pondérée par 3/5.

$C_3$ : Sinon on retrouve le cas où au moins un des identifiants est entièrement écarté pour une partie du calcul (soit parce qu'il ne contient aucun chemin issu d'une sous-hiérarchie spéciale, soit parce que tout ses chemins sont issus d'une sous-hiérarchie spéciale). Dans ce dernier cas, la (les) note(s) pour la(les)quelle(s) il manque un chemin est (sont) nulle(s). Cette valeur entrera en jeu dans le calcul de la note générale, pondérée en fonction du nombre de chemins impliqués. Exemple : P2("981 ") et P6("321") ou P5("4") et P3("982") ou P7("2145", "9624", "985") et P3 ("982"). P2 et P6 ou P5 et P3 auront une note générale nulle. Pour P7 et P3, leur note sera pondérée aux ¾ pour "9624", "985", "982" + ¼ * 0 pour "2145".

Une description générale du mode opératoire d'exécution du calcul et du codage d'une note entre deux concepts quelles soient les origines de leur chemin, relativement à l'appartenance ou à la non appartenance de ces concepts à une sous-hiérarchie spéciale sera maintenant donnée en liaison avec la figure 5.

Sur la figure 5 précitée, on considère deux concepts $C_i$ et $C_j$ auxquels est associé un identifiant $I_i$ respectivement $I_j$, chaque identifiant étant de la forme de la relation 14 de la figure 5 :

$$I_i = \left\{ PATH_{ki} \right\}_{k=1}^{k=K} \text{ et } I_j = \left\{ PATH_{k'i} \right\}_{k'=1}^{k'=K'}$$

Sur les concepts précités, on procède alors à une vérification logique selon la relation 15 correspondant à la condition $C_1$ précédemment mentionnée dans la description.

$$\forall k, PATH_{ki} \neq \mathbf{max}|T_{ki} \ ET \ \forall k', PATH_{k'j} \neq \mathbf{max}|T_{k'j}$$

$$OU$$

$$\forall k, PATH_{ki} = \mathbf{max}|T_{ki} \ ET \ \forall k', PATH_{k'j} = \mathbf{max}|T_{k'j}.$$

Dans la relation précédente,

- $PATH_{ki}$ représente un chemin de rangk de l'identifiant $I_j$, $K$ désignant un nombre maximum de chemins pour l'identifiant $I_j$ considéré ;
- $PATH_{k'J}$ désigne un chemin de rang k' de l'identifiant $I_j$, K' désignant le nombre maximum de chemins de cet identifiant ;
- $\mathbf{max}|T_{ki}$ et $\mathbf{max}|T_{k'j}$ désignent un chemin préfixé par la valeur maximale entier $\mathbf{max}$, $T_{ki}$ et $T_{k'j}$ désignant des queues de chemins quelconques associés à la valeur de préfixe $\mathbf{max}$ ;
- OU représente la relation logique de l'alternative si aucun des deux identifiants ou si les deux ont tous leurs chemins précédemment mentionnés à la condition $C_1$ dans la description.

Sur réponse positive au test 031, alors la condition $C_1$ est vérifiée et la note choisie est celle qui correspond à la note de proximité entre les deux concepts, soit $NSS_{ij} = NPROX_{ij}$.

Sur réponse négative au test 031, on appelle un test 032 lequel permet la mise en oeuvre de la condition $C_2$ précédemment décrite dans la description. Cette condition $C_2$ est représentée par la relation logique :

$$K \geq 2 \, ET \, K' \geq 2$$

$$ET$$

$$\exists PATH_{ki} = \mathbf{max}|T_{ki} \ ET \ \exists PATH_{ki} \neq \mathbf{max}|T_{ki}$$

$$ET$$

$$\exists PATH_{k'j} = \mathbf{max}|T_{k'j} \ ET \ \exists PATH_{k'j} \neq \mathbf{max}|T_{k'j}.$$

Dans la relation 17, on comprend que les mêmes variables désignent les mêmes entités que dans la relation 15.

Sur réponse positive au test 032, la condition $C_2$ est satisfaite et la note de similarité sémantique et spatiale $NSS_{ij}$ est calculée et codée comme une moyenne pondérée entre les deux notes obtenues $n(PATH_{ki})$, $n(PATH_{k'j})$, en fonction du nombre de chemins participants dans chacune des notes.

Au contraire, sur réponse négative au test 032, une étape 033 est appelée laquelle correspond à la condition $C_3$ selon laquelle l'un au moins des identifiants est totalement écarté, soit parce qu'il n'appartient pas à une sous-hiérarchie spéciale, soit parce qu'il appartient à une sous-hiérarchie spéciale où la ou les notes de similarité sémantique et spatiale pour laquelle ou lesquelles il manque un chemin et/ou sont prises égales à 0. La note de similarité sémantique et spatiale est calculée et codée comme une moyenne pondérée entre cette note nulle et l'autre note.

Cette opération est représentée par la relation 19 :

$$n\left(PATH_{ki}\right), OU\ n\left(PATH_{k'_j}\right) = 0$$

$$NSS_{ij} = N\left[n\left(PATH_{ki}\right), n\left(PATH_{k'_j}\right)\right].$$

Bien entendu, l'invention couvre également un programme d'ordinateur comprenant une suite d'instructions mémorisées sur un support de mémorisation pour exécution par un ordinateur ou par un système de consultation d'une ontologie mémorisée sous forme de treillis numéroté hiérarchiquement. Ce programme d'ordinateur est remarquable en ce que, lors de son exécution, les instructions exécutent le calcul et le codage d'une note de similarité sémantique et spatiale par rapprochement relativement à leurs caractéristiques sémantiques communes, respectivement par l'éloignement en fonction de leur distance pour chaque concept vis-à-vis d'un concept central, pris deux à deux, ainsi que décrit précédemment dans la description en liaison avec les figures 2a et les figures suivantes.

On comprend en particulier que le programme d'ordinateur précité peut être mis en oeuvre sous forme de module logiciel distinct pour exécuter, par exemple, le calcul et le codage de la note de similarité sémantique et spatiale respectivement la discrimination dans la hiérarchie de concepts d'origine, d'au moins une sous-hiérarchie spéciale définie comme un sous-ensemble de concepts dont le nombre de concepts et la profondeur des descendants des concepts de ce sous-ensemble de concepts est inférieur à un sous-ensemble de seuil.

Enfin, un exemple d'utilisation possible des notes de similarité sémantique et spatiale $NSS_{ij}$ obtenues conformément au tableau T2 précité, sera donné dans le cadre de plusieurs contextes en liaison avec la figure 6.

L'utilisation d'une métrique sémantique et spatiale présente des intérêts dans plusieurs contextes tels que les contextes suivants :

- tout d'abord dans le cadre d'une formulation de requête sur une large ontologie ainsi que décrit dans les demandes de brevet français parallèles *« Procédé et dispositif de codage du regroupement de concepts d'une ontologie mémorisée sous forme de treillis numéroté hiérarchiquement », « Procédé et dispositif de codage d'une ontologie synthétique bornée en profondeur »* déposées le même jour par la demanderesse. Cette note de similarité sémantique et spatiale fournit une base pour visualiser et donc consulter une hiérarchie large et diversifiée. Elle peut ainsi servir à proposer une version synthétique de la hiérarchie de concepts en limitant le nombre de concepts à l'affichage pour n'afficher que des concepts "centraux" vis-à-vis des différentes sous-hiérarchies. Les concepts sont dits centraux s'ils sont proches sémantiquement et spatialement de plusieurs concepts, autres concepts, si proches que les autres concepts n'ont pas besoin d'être représentés sur la version synthétique de la hiérarchie.
  Exemple : On peut synthétiser à droite de la figure 6 la hiérarchie de concepts représentée en figure 1, à gauche, pour ne garder qu'un concept sur deux. La hiérarchie a été découpée sémantiquement et spatialement en 5 groupements symbolisés chacun par un polygone, dont 4 contiennent deux concepts et un est restreint au concept I ;
- cette note de similarité sémantique et spatiale peut également servir d'heuristique pour les algorithmes de présentation exhaustive de larges graphes afin de déterminer si tel ou tel noeud ou concept doit être rapproché de tel autre en évitant les calculs coûteux et complexes de plus petits généralisants communs entre plusieurs concepts.
  Exemple : Les outils de visualisation actuels de larges graphes présentent des nuages de points, plutôt illisibles, mais qui donnent une représentation spatiale et graphique (sous forme de noeuds et d'arcs entre ces noeuds) de la hiérarchie en minimisant les croisements d'arcs pour faciliter la lecture. Les choix des paquets de concepts ou de la position de certains concepts sur le dessin représentant le graphe peuvent être orientés par cette note de proximité.

L'invention couvre enfin un dispositif DIV de calcul et de codage d'une note de similarité sémantique et spatiale entre concepts d'une ontologie mémorisée sous forme de treillis numéroté hiérarchiquement, tel que représenté, de manière non limitative, en figure 7. Ce dispositif DIV peut, par exemple être directement intégré à un fournisseur d'ontologie $H_c$, ou, ainsi que représenté en figure 7, connecté en réseau à ce dernier. Il comporte, dans cette dernière hypothèse, outre des organes d'entrée / sortie I/O, une unité centrale de traitement CPU, une mémoire RAM et une mémoire programmable PM par exemple, des ressources de calcul et de codage, formées par un module de programme d'ordinateur $M_o$, d'une note de similarité sémantique et spatiale $NSS_{ij}$ pour chaque concept vis-à-vis d'un concept central pris deux à deux, par rapprochement relativement à leurs caractéristiques sémantiques communes respectivement par éloignement en fonction de leur distance spatiale, par attribution d'une note de pénalité pen, ainsi que décrit précédemment en liaison avec les figures 4a à 4c et 5.

En outre, le dispositif DIV comporte également une ressource de discrimination de sous-hiérarchies spéciales, formée par un module de programme d'ordinateur $M_1$, dont la profondeur de chacun des concepts vérifie la fonction « EstSpecial(c) » décrite en liaison avec les figures $3a_1$ et $3a_2$.

Il comporte enfin une ressource de renumérotation des concepts formé par un programme d'ordinateur $M_2$,

permettant de préfixer tout identifiant d'un concept appartenant à une sous-hiérarchie spéciale par le plus petit nombre entier positif **max** non encore attribué aux concepts de la hiérarchie de concepts complète $H_c$, ainsi que décrit précédemment en liaison avec la figure 3b.

## Revendications

1. Procédé de calcul et de codage d'une note de similarité sémantique et spatiale entre concepts d'une ontologie mémorisée sous forme de treillis numéroté hiérarchiquement, à chaque concept du treillis étant associé un identifiant comportant au moins un chemin, chaque chemin consistant en une suite d'entiers et correspondant à une succession d'arcs orientés entre le concept auquel est alloué ledit au moins un chemin et le concept universel pour former une hiérarchie de concepts sous le concept universel, chaque chemin associé audit concept définissant un trajet par l'intermédiaire de concepts père respectivement fils successifs, permettant d'atteindre le concept, **caractérisé en ce qu'**il consiste au moins à calculer et coder une note de similarité sémantique et spatiale par rapprochement relativement à leurs caractéristiques sémantiques communes respectivement par éloignement en fonction de leur distance spatiale pour chaque concept vis-à-vis d'un concept central, pris deux à deux.

2. Procédé selon la revendication 1, **caractérisé en ce que**, préalablement à l'étape consistant à calculer une note de similarité sémantique et spatiale, ledit procédé consiste en outre à discriminer, dans la dite hiérarchie de concepts, au moins une sous-hiérarchie spéciale, définie comme un sous ensemble de concepts dont le nombre de concepts fils et la profondeur des descendants desdits concepts de ce sous-ensemble de concepts est inférieure à une valeur de seuil, ladite hiérarchie de concepts étant subdivisée en une première sous-hiérarchie de concepts contenant ladite au moins une sous-hiérarchie spéciale et en une deuxième sous-hiérarchie de concepts contenant les autres concepts de la hiérarchie de concepts n'appartenant pas à ladite première sous-hiérarchie, compte tenu de l'appartenance respectivement de la non appartenance de chaque concept à ladite au moins une sous-hiérarchie spéciale.

3. Procédé selon la revendication 2, **caractérisé en ce qu'**une sous-hiérarchie spéciale est définie comme une sous-hiérarchie de ladite hiérarchie de concepts dont la profondeur de chacun des concepts est inférieure à une valeur déterminée de profondeur maximale de sous-hiérarchie spéciale et dont le nombre de concepts fils pour un de chacun de ces concepts est inférieur à une valeur déterminée de largeur maximale de sous-hiérarchie spéciale.

4. Procédé selon l'une des revendications 2 ou 3, **caractérisé en ce que** l'étape consistant à discriminer, dans ladite hiérarchie des concepts, au moins une sous-hiérarchie spéciale, inclut au moins une renumérotation desdits concepts, ladite renumérotation consistant à préfixer tout identifiant d'un concept appartenant à une sous-hiérarchie spéciale par le plus petit nombre entier positif non encore attribué aux concepts de la hiérarchie de concepts.

5. Procédé selon l'une des revendications 1 à 4, **caractérisé en ce que** l'étape de calcul et, de codage d'une note de similarité sémantique et spatiale inclut au moins l'étape consistant à calculer et coder une note de similarité d'un concept vis-à-vis d'un concept central appartenant à ladite deuxième sous-hiérarchie de concept en rapprochant ledit concept vis-à-vis du concept central en fonction des caractéristiques sémantiques communes de ces derniers et en éloignant ledit concept vis-à-vis dudit concept central en nombre de pas de spécialisation vis-à-vis du concept général commun à ces derniers, par affectation d'une valeur de pénalité, fonction de la profondeur de ladite hiérarchie de concepts.

6. Procédé selon l'une des revendications 1 à 5, **caractérisé en ce que** l'étape de calcul et de codage d'une note de similarité sémantique et spatiale inclut en outre l'étape consistant à écarter de l'ensemble des concepts de ladite hiérarchie de concepts tout concept appartenant à ladite au moins une sous-hiérarchie spéciale formant ladite première sous-hiérarchie de concepts.

7. Procédé selon la revendication 5 ou 6, **caractérisé en ce que** ladite note de similarité sémantique et spatiale est une valeur normalisée comprise entre 0 et 1, définie comme la moyenne pour chaque chemin du rapport de proximité diminué du produit de la valeur de la pénalité et du nombre d'autres caractéristiques définies dudit concept et augmenté de la pénalité maximale, produit de la profondeur de ladite hiérarchie de concepts et de la valeur de la pénalité.

8. Procédé selon l'une des revendications 4 à 7, **caractérisé en ce que** celui-ci consiste en outre à prendre en compte tout concept dont tout ou partie des chemins de l'identifiant de ce concept appartient à au moins une sous-hiérarchie spéciale.

9. Procédé selon l'une des revendications 4 à 8, **caractérisé en ce que** pour calculer et coder une note de similarité sémantique et spatiale entre un premier et un deuxième concept d'une hiérarchie de concepts, indépendamment de leur appartenance ou non à une sous-hiérarchie spéciale, ledit procédé inclut:

- si aucun des identifiants desdits concepts n'inclut de chemin préfixé appartenant à une sous-hiérarchie spéciale, ou
- si dans les chemins tous les identifiants sont préfixés et appartiennent à une sous hiérarchie spéciale, la note de similarité sémantique et spatiale est calculée comme la note de proximité entre ces deux concepts ; sinon,
- si chaque identifiant possède au moins deux chemins dont l'un appartient à une sous-hiérarchie spéciale et dont l'autre n'appartient pas à une sous-hiérarchie spéciale, la note de similarité sémantique et spatiale est calculée et codée comme une moyenne pondérée entre les deux notes obtenues en fonction du nombre de chemins participants dans chacune des notes ; sinon,
- l'un au moins des identifiants étant totalement écarté, soit parce qu'il n'appartient à une sous-hiérarchie spéciale, soit parce qu'il appartient à une sous-hiérarchie spéciale, la ou les notes de similarité sémantique et spatiale pour laquelle ou lesquelles il manque un chemin est ou sont prises égale à zéro, la note de similarité sémantique et spatiale est calculée et codée comme une moyenne pondérée entre cette note nulle et l'autre note.

10. Programme d'ordinateur comportant une suite d'instructions mémorisées sur un support de mémorisation pour exécution par un ordinateur ou par un système de consultation d'une ontologie mémorisée sous forme de treillis numéroté hiérarchiquement, **caractérisé en ce que** ledit programme lors de son exécution, exécute le calcul et le codage d'une note de similarité sémantique et spatiale par rapprochement relativement à leurs caractéristiques sémantiques communes respectivement par éloignement en fonction de leur distance pour chaque concept vis-à-vis d'un concept central, pris deux à deux, selon l'une des revendications 1 à 9.

11. Dispositif de calcul et de codage d'une note de similarité sémantique et spatiale entre concepts d'une ontologie mémorisée sous forme de treillis numéroté hiérarchiquement, **caractérisé en ce que** ledit dispositif comporte au moins des moyens de calcul et de codage d'une note de similarité sémantique et spatiale par rapprochement relativement à leurs caractéristiques sémantiques communes respectivement par éloignement en fonction de leur distance spatiale pour chaque concept vis-à-vis d'un concept central, pris deux à deux.

12. Dispositif selon la revendication 11, **caractérisé en ce que** celui-ci comporte en outre :

- des moyens de discrimination de sous-hiérarchies spéciales, dont la profondeur de chacun des concepts est inférieure à une valeur déterminée de profondeur maximale de sous-hiérarchie spéciale et dont le nombre de concepts fils pour un de chacun de ces concepts est inférieur à une valeur déterminée de largeur maximale de sous-hiérarchie spéciale ;
- des moyens de renumérotation desdits concepts, ladite renumérotation consistant à préfixer tout identifiant d'un concept appartenant à une sous-hiérarchie spéciale par le plus petit nombre entier positif non encore attribué aux concepts de la hiérarchie de concepts.

| $C_i$ | | $I_i$ | |
|---|---|---|---|
| D | 1 | | |
| G | 2 | | |
| C | 11 | | |
| B | 111 | | |
| E | 112 | | |
| H | 113 | 21 | |
| A | 1111 | 1121 | |
| F | 1112 | 1122 | |
| I | 1131 | 211 | |

## FIG. 1
### (ART ANTÉRIEUR)

$$H_c \left\{ C_i, I_i \right\}_{i=1}^{i=i\,max}$$

$$NSS_{ij} = f\left( CS_{ij}, D_{ij} \right) \quad 1$$

## FIG. 2a

$$H_c \left\{ C_i, I_i \right\}_{i=1}^{i=i\,max}$$

Discrimination

$$\exists \left\{ H_{cs} \right\}_{s=1}^{s=s} \mid H_{cs} = \left\{ C_{is}, I_{is} \right\} \mid \begin{array}{l} NC_{isf} < LS_p \\ PH_{is} < PS_p \end{array}$$

0

$$NSS_{ij} = f\left( CS_{ij}, D_{ij} \right)$$

1

## FIG. 2b

## FIG. 6

$$LR_{ep} = [\ ]$$

$$LCG_{s-h} = \left[ C \vdots T_G \right] \quad \boxed{01}$$
$$LCG_{s-h} \longleftarrow T_G$$

$$EstSpecial\ (C)\ ? \quad \boxed{02}$$

NON

OUI

$$TR_{ep} \longleftarrow LR_{ep} \quad \boxed{03}$$
$$Cis \longleftarrow C$$
$$LR_{ep} \longleftarrow \left[ Cis \vdots TR_{ep} \right]$$

$$LCG_{s-h} = [\ ]\ ? \quad \boxed{04}$$

NON

OUI

$$\boxed{LR_{ep}} \quad \boxed{05}$$

# FIG. 3a1

C — 020

$LC_f \longleftarrow$ sons (C)

OK $\longleftarrow$ PH (C) $<$ PS$_p$ et size (LC$_f$) $<$ LS$_p$ — 021

022

OUI — OK ? — NON

023

OUI — $LC_f = [\ ]$ ?

NON

024

$LC_f = \begin{bmatrix} C2 \vdots T \end{bmatrix}$

$LC_s \longleftarrow T$

OK $\longleftarrow$ EstSpecial (C2)

$L_{rep}$ = vraie — 026

$L_{rep}$ = faux — 025

FIG. 3a2

**FIG. 3b**

FIG. 4a

FIG. 4b

$$I_i = \left\{ PATH_{ki} \right\}_{k=1}^{k=K}$$

$$I_j = \left\{ PATH_{k'j} \right\}_{k'=1}^{k'=K'}$$

FIG. 5

FIG. 7

**Office européen**

**des brevets**

# DECLARATION

qui selon la règle 63 de la Convention sur le brevet
européen est considerée, aux fins de la procédure ultérieure,
comme le rapport de la recherche européenne

Numéro de la demande

EP 07 11 0578

| La division de la recherche estime que la présente demande de brevet n'est pas conforme aux dispositions de la CBE au point qu'une recherche significative sur l'état de la technique ne peut être effectuée au regard de toutes les revendications | CLASSEMENT DE LA DEMANDE (IPC) |
|---|---|
| Raison : | INV. G06N5/02 |

Les revendications se réfèrent à un
procédé de calcul et de codage d'une note
de similarité dans une ontologie
(revendications 1-9), un programme
d'ordinateur (revendication 10) selon ce
procédé, et un dispositif de calcul et de
codage d'une note de similarité
(revendications 11-12). Tel que
revendiqué, ce procédé ne constitue qu'une
méthode mathématique, exclue de la
brevetabilité.
Ce programme et ce dispositif n'ajoutent
aucune caractéristique technique nouvelle
à ce procédé, ne laissant donc aucune base
pour une activité inventive.
La non-conformité avec les exigences de
brevetabilité est telle qu'une recherche
significative portant sur l'ensemble de
l'objet revendiqué n'a pas pu être
effectuée.
La description, à la page 22, lignes
13-31, donne le pseudo code d'un
algorithme général de détection de
sous-hiérarchies, et donne, à la page 27,
lignes 11-32, le pseudo code d'un
algorithme général de renumérotation. Ces
algorithmes ne sont exprimés qu'en termes
de listes de concepts dans un treillis et
il est impossible de comprendre la
solution d'un problème technique associé à
ces algorithmes.
À la page 37, lignes 18-27 il est décrit
que le programme est remarquable par son
rapprochement relatif à des
caractéristiques sémantiques et par son
éloignement vis-a-vis d'un concept
central. Dans ce cas, le programme
n'ajoute aucun caractéristique technique.
De la page 38, ligne 30 jusqu'à la page

-/--

| Lieu de la recherche | Date | Examinateur |
|---|---|---|
| La Haye | 1 février 2008 | Kingma, Ype |

EPO FORM 1504 (P04F38)

**DECLARATION**

**Office européen**

**des brevets**

qui selon la règle 63 de la Convention sur le brevet européen est considerée, aux fins de la procédure ultérieure, comme le rapport de la recherche européenne

Numéro de la demande

EP 07 11 0578

| La division de la recherche estime que la présente demande de brevet n'est pas conforme aux dispositions de la CBE au point qu'une recherche significative sur l'état de la technique ne peut être effectuée au regard de toutes les revendications | CLASSEMENT DE LA DEMANDE (IPC) |
|---|---|
| Raison : <br><br> 39, ligne 9 il est décrit avec un exemple que cette note de similarité peut servir d'heuristique pour des algorithmes de présentation exhaustive de larges graphes. Cependant, un effet technique clair n'est pas apparent dans cet exemple. En l'absence, dans la demande, des caractéristiques qui permettent la compréhension de la solution d'un problème technique, sur la base de laquelle on puisse raisonnablement s'attendre à ce qu'un objet particulier soit revendiqué à un stade ultérieur de la procédure, aucune recherche n'a été considérée possible. <br><br> L'attention du déposant est attirée sur le fait que, suite à une déclaration conformément à la Règle 63 CBE, une recherche pourrait être effectuée pendant la phase d'examen, à condition que les problèmes ayant conduit à cette déclaration de non-recherche ou de recherche incomplète aient été résolus (voir Directives OEB C-VI, 8.2). <br> ----- | |

| Lieu de la recherche | Date | Examinateur |
|---|---|---|
| La Haye | 1 février 2008 | Kingma, Ype |

EPO FORM 1504 (P04F38)

**RÉFÉRENCES CITÉES DANS LA DESCRIPTION**

**Documents brevets cités dans la description**

- FR 0507326

- FR 0507526